(19)

Europäisches
Patentamt

European
Patent Office

Office européen
des brevets

(11) **EP 4 557 079 A1**

(12) **EUROPEAN PATENT APPLICATION**

(43) Date of publication:
**21.05.2025 Bulletin 2025/21**

(21) Application number: **23209650.3**

(22) Date of filing: **14.11.2023**

(51) International Patent Classification (IPC):
**G06F 8/35** *(2018.01)*    **G06N 3/0455** *(2023.01)*

(52) Cooperative Patent Classification (CPC):
**G06F 8/35; G06N 3/045; G06N 3/0455**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
• **NAYAK, Prajwal
560062 Bangalore, Karnataka (IN)**

• **ANTONY, Elvis
560102 Bangalore (IN)**
• **N, Madhusudanan
560036 Bengaluru, Karnataka (IN)**
• **CHENECHARRY, Vivek
560083 Bengaluru, Karnataka (IN)**
• **SINGH, Vivek
560087 Bangalore, Karnataka (IN)**

(74) Representative: **Isarpatent
Patent- und Rechtsanwälte
Barth Hassa Peckmann & Partner mbB
Friedrichstraße 31
80801 München (DE)**

(54) **METHOD AND SYSTEM FOR GENERATING SPECIFIC ENGINEERING PROGRAM COMPATIBLE WITH COMPUTING PLATFORM**

(57)    The present invention provides a method and system for generating a specific engineering program compatible with computing platform. The method comprises receiving, by a processing unit (202), a user request to generate a specific engineering program (712) from information associated with at least one engineering program (702). The method further comprises generating, by the processing unit (202), a knowledge graph (708) based on the information associated with the at least one engineering program. The method further comprises applying, by the processing unit, a transformer autoencoder model 124A, on the generated knowledge graph (708), wherein the transformer autoencoder model (124A) is configured to generate the specific engineering program (712) based on the knowledge graph (708). The method further comprises generating, by the processing unit, the specific engineering program (712) based on the application of the transformer autoencoder model (124A) on the knowledge graph (708).

FIG 1

EP 4 557 079 A1

**Description**

The present invention relates to a field of computer assisted programming, and more particularly relates to a method and system for generation of a specific engineering program which is compatible with a specific computing platform.

Typically, an engineering program is coded manually by a coder, so that the engineering program is executable in a computing platform. The computing platform refers to any computing infrastructure which is capable of executing one or more computer programs. Examples of the computing platform includes, but is not limited to a operating system based platform, a cloud computing platform, a hardware based platform, and a programmable logic controller based platform. In one example, the computing platform may execute the engineering program only if the engineering program is coded in compliance with a specification associated with the computing platform. The specification comprises information associated with a plurality of syntactic and semantic rules, which define a manner in which the engineering program should be coded in the engineeering program, so that the engineering program is compatible with the computing platform. Examples of the plurality of constituent elements include but is not limited to a function, a variable, a conditional statement, a word, a class, a graphical object, and a loop statement in the engineering program. Thus, the engineering program has to be coded manually by the coder in line with the plurality of syntactic and semantic rules.

The plurality of syntactic and semantic rules vary depending upon a plurality of factors such as the computing platform, a version of an operating system running in the computing platform, and a coding language used to code the engineering program. Furthermore, a company which owns the computing platform may have a list of company specific policies which dictate a manner in which the engineering program should be coded.

In one example, a first specification is associated with a first computing platform and a second specification is associated with a second computing platform. In one scenario, the engineering program, which is coded in accordance with the first specification, is to be executed in the second computing platform. In such a scenario, the coder has to manually recode the engineering program based on the second specification. Furthermore, in a case where a version of the operating system is upgraded, the coder has to manually modify the engineering program to conform to a plurality of rules and policies associated with an upgraded version of the operating system.

Furthermore, in a case where an engineering program has to be recoded in a different programming language, the coder has to manually re-code the engineering program based on a set of syntactic and semantic rules of the programming language.

It is difficult to modify the engineering program manually because of the large number of design features and lines of program code of the engineering program. Furthermore, it is impossible to use a traditional language translator algorithm to translate the engineering program to a different programming language because the traditional translator algorithms fail to capture a plurality of interdependencies between the plurality of constituent elements of the engineering program.

In other words, it is laboursome for the coder to manually modify a huge number of data items and a huge number of metadata items in the engineering program so that a modified engineering program conforms with rules and policies associated with an upgraded computing platform or an upgraded operating system.

Prior to the present invention, several prior art documents have addressed the challenges associated with manual translation of programming code from one specification to other. In a first prior art reference, a LSTM encoder-decoder is used to translate a pseudocode to C++ language. The LSTM encoder-decoder model is configured to translate each line of the pseudocode sequentially to generate a c++ code snippet. In a second prior art reference, a pretrained language model is configured to translate textual data from a first natural language to a second natural language. To perform the translation, the pretrained language model first converts the textual data into a knowledge graph and further injects data captured from internet into the knowledge graph. The pretrained language model further applies a graph neural network on the knowledge graph to identify subgraphs which have been injected into the knowledge graph. Furthermore, the pretrained language model ranks the identified subgraphs based on a degree of relevancy. The pretrained language model uses the knowledge graph and the ranked list of the identified subgraphs to translate the textual data from the first natual language to the second natural language. In a third prior art reference, a cross-lingual language model is pretrained using mono lingual source code data sets. Further, a denoising autoencoding algorithm is used to generate translations of a plurality of input sequences to the cross-lingual language model.

However, none of the aforementioned prior arts teach or suggest a system which recodes an engineering program after capturing a plurality of similarities and a plurality of interrelationships between a plurality of constituent data items of the engineering program in a holistic manner. Furthermore, none of the aforementioned prior arts teaches a system which performs translation of the input engineering program by prioritizing the captured plurality of similarities and the captured plurality of interrelationships between the plurality of constituent data items.

In light of above, there exists a need for an efficient method and system for generating a specific engineering program from information associated with at least one engineering program.

Therefore, it is an object of the present invention to provide a method and system for generating a specific engineering program which is compatible with a specific computing platform. The present invention is implemented by an automation module which is implemented in one or more processing units in an industrial plant.

The object of the invention is achieved by a computer implemented method of generating a specific engineering program which is compatible with a specific computing platform. In one example, the specific engineering program comprises a plurality of code segments which are implementations of one or more functions. The one or more functions include at least one of a computer function, a mathematical function, a control function, an image processsing function. A controller device such as a programmable logical controller is configured to execute the specific engineering program or the at least one engineering program to implement the one or more functions in an industrial plant. Examples of the industrial plants include but is not limited to a manufacturing plant, an energy production plant, a waste management plant and a water treatment plant.

The computing platform refers to any computing infrastructure which is capable of executing one or more engineering programs. Examples of the computing platform includes, but is not limited to a operating system based platform, a cloud computing platform, a hardware based platform, and a programmable logic controller based platform. In one example, the computing platform may execute the specific engineering program only if the engineering program is coded in compliance with a specification associated with the computing platform. The specification comprises information associated with a plurality of syntactic and semantic rules, which define a manner in which the engineering program should be coded, so that the engineering program is compatible with the computing platform. Thus, the engineering program has to be coded manually by the coder in line with the plurality of syntactic and semantic rules.

An engineering program is hereafter referred to as being compatible with a specific computing platform if the specific engineering program fulfills a plurality of compatibility requirements of the specific computing platform. The plurality of compatibility requirements includes but is not limited to a programming language compatible with the specific computing platform, a syntax compatible with the specific computing platform, and a program length compatible with the specific computing platform. The plurality of compatibility requirements comprises a set of syntactic and semantic rules. The set of syntactic and semantic rules comprises a rule for naming progrm variable, a rule for naming program data structures, a rule for generating conditional and loop statements and a rule for arranging one or more code elements in the engineering program. In other words, the engineering program is compatible with the specific computing platform if the engineering program is coded in a specific specification which encompases the set of syntactic and semantic rules.

The automation module is configured to generate the specific engineering program from information associated with at least one engineering program. The information associated with the at least one engineering program may be received from a user. The at least one engineering program is coded in accordance with a first specification. The generated specific engineering program is coded in accordance with a second specification. The second specification comprises a set of syntactic and semantic rules which are aligned with the plurality of compatibility requirements of the specific computing platform. Thus, the generated specific engineering program is compatible with the computing platform.

In one example, the at least one engineering program comprises a programming language based implementation of one or more functions. Furthermore,the specific engineering program comprises a natural language based description of the one or more functions. In the at least one engineering program, the one or more functions are described in at least one of a high level language such as IECPL, in a machine language or in an Assembly language . In the specific engineering program, the one or more functions are described in a natural language like English. In such a case, the automation module is configured to generate the specific engineering program which comprises the natural language based description of the one or more functions, from the at least one engineering program.

In another example, the at least one engineering program is a graphical program which is indicative of a plurality of functions, depicted as graphical programming blocks. The specific engineering program is a machine language based implementation of the plurality of functions. In such a case, the automation module is configured to generate the specific engineering program which comprises the machine language based implementation of the plurality of functions, from the graphical program which is indicative of the plurality of functions.

In a preferred embodiment, the method comprises training, by the processing unit, a plurality of transformer autoencoder models to generate a first engineering program from a second engineering program. Each transformer autoencoder model of the plurality of transformer autoencoder models is an artifical intelligence model such as a convolutional neural network or a deep neural network. The first engineering program is of a first specification and the second engineering program is of a second specification. The first specification and the second specification are indicative of a plurality of syntactic and semantic rules associated with the first engineering program and the second engineering program respectively. The first engineering program comprises information arranged in accordance with the first specification and the second engineering program comprises information arranged in accordance with the second specification.

Each transformer autoencoder model of the plurality of transformer autoencoder model has a specific transformation objective. The specific transformation objective of a transformer autoencoder model is indicative of an input specification and an output specification of the transformer autoencoder model. For example, each transformer autoencoder model of the plurality of transformer autoencoder models is configured to convert information associated with an engineering program with an input specification into a autoencoder specific engineering program of a specific specification. The input specification is indicative of a format of the engineering program which is converted by the transformer autoencoder model.

The information associated with the engineering program comprises a plurality of node embeddings of a knowledge graph associated with the engineering program. The plurality of node embeddings is a vector space representation of a plurality of nodes of a name graph of the engineering program. The name graph comprises information associated with one or more constituent data items of the engineering program, such as words, code segments, graphical objects, functions, variables, comments, classes, data structures, and code snippets and a plurality of interdependencies between the one or more constituent data items. In the vector space representation of the plurality of nodes, the plurality of nodes are arranged in such a manner that a distance between two or more nodes in the vector space representation is inversely proportional to a degree of similarity between the two or more nodes of the plurality of nodes. Thus, each node in the plurality of node embeddings carry information about the node themselves and further carry information about neighbouring nodes.

In a preferred embodiment, each transformer autoencoder model of the plurality of transformer autoencoder models comprises an encoder model and a decoder model. The encoder model of each transformer autoencoder model comprises a first set of neurons and a first set of neural weights. The encoder model is at least one of a Graph Convolutional Networks, GraphSAGE (Graph Sample and Aggregated Embedding), or a Graph Isomorphism Network (GIN). The decoder model of each transformer autoencoder model comprises a second set of neurons and a second set of neural weights. Examples of the decoder model includes but is not limited to a Feedforward Decoder model, a Convolutional Decoder model, a Graph Decoder model, or a Recurrent Generative Model based decoders.

The processing unit is configured to train the encoder model for each transformer autoencoder model of the plurality of transformer autoencoder models by iterative execution of a first set of steps. In one example, each execution of the first set of steps trains an encoder model of a specific transformer autoencoder model of the plurality of transformer autoencoder models.

To train an encoder model of the specific transformer autoencoder model of the plurality of transformer autoencoder models, the processing unit executes the first step of the first set of steps. In the first step of the first set of steps, the processing unit is configured to receive a plurality of input data items. The plurality of input data items comprises a plurality of portions of a knowledge graph associated with the engineering program.

In a second step of the first set of steps, the processing unit is configured to apply the encoder model on the plurality of input data items. The encoder model is configured to encode the plurality of input data items to generate a plurality of encoded data items. The plurality of encoded data items is at least one of a graph embedding, a word embedding, state embeddings, or sequence-to-sequence embedding.

In a third step of the first set of steps, the processing unit is configured to apply the decoder model on the plurality of encoded data items to generate a plurality of reconstructed data items. The decoder model is configured to reconstruct the plurality of input data items from the plurality of encoded data items. However, the decoder model is unable to generate a faithful reconstruction of the plurality of input data items as there is a possibility of reconstruction loss. Thus, the generated plurality of reconstructed data items is different from the plurality of input data items.

In a fourth step of the first set of steps, the processing unit is configured to compare the plurality of input data items with the plurality of reconstructed data items. In one example, the plurality of input data items is compared with the plurality of reconstructed data items by application of a of a comparison algorithm such as cosine similarity algorithms, Levenshtein distance, Jaccard similarity, or Sounde algorithms on the plurality of reconstructed data items and the plurality of input data items. The processing unit is further configured to determine a reconstruction loss parameter based on the comparison. In one example, the reconstruction loss parameter is indicative of a plurality of differences between the plurality of input data items and the plurality of reconstructed data items. In other words, the reconstruction loss parameter is indicative of a reconstruction loss associated with the transformer autoencoder model.

In a fifth step of the first set of steps, the processing unit is configured to apply an optimizing algorithm on the encoder model to optimize the first set of neural weights of the first set of neurons of the encoder model. In one example, the optimization algorithm is a Stochastic Gradient Descent optimizer algorithm which is configured to optimize the first set of weights with an optimization goal of minimizing the reconstruction loss parameter of the transformer autoencoder model. In other words, the processing unit is configured to optimize the first set of neural weights of the encoder model by application of the optimization algorithm on the first set of neural weights based on the determined reconstruction loss parameter. Thus the processing unit is configured to iterate the first set of steps until the first set of weights are optimized such that the reconstruction loss parameter is minimized. Thus, the processing unit is configured to train the encoder model of each transformer autoencoder model by iterative execution of the first set of steps.

Similarly, a decoder model of each transformer autoencoder model is trained by the processing unit by iteratively executing the second set of steps. To train a decoder model of a specific transformer autoencoder model of the plurality of transformer autoencoder models, the processing unit executes the first step of the second set of steps. In the first step of the second set of steps, the processing unit is configured to receive an input data item. The input data item is a portion of a knowledge graph associated with the engineering program. In one example, the input data item comprises at least one node embedding of the knowledge graph. In another example, the input data item is at least one constituent data item of the plurality of constituent data items of the engineering program.

In the first step, the processing unit is further configured to receive an expected data item from a user or from a database. It is noted that the transformer autoencoder model is trained to generate the autoencoder specific engineering program. The expected data item is a portion of the autoencoder specific engineering program which corresponds to the transformer autoencoder model. In other words, the transformer autoencoder model is ideally expected to convert the input data item to the expected data item. In one example, the user generates the expected data item manually and the processing unit receives the expected data item from the user. In other words, in a case where the input data item corresponds to a specific portion of the engineering program, the expected data item is a portion, of the autoencoder specific engineering program, which corresponds to the specific portion of the engineering program.

In one example, the transformer autoencoder model is configured to generate an autoencoder specific engineering program which is a natural language based representation of a plurality of functions. Further, in the example, the engineering program, which is to be processed by the transformer autoencoder model, comprises sourcecode which implements the plurality of functions in a programming language. In such a case, the transformer autoencoder model is trained to convert the natural language based representation into the sourcecode. In such a case, the input data item comprises a portion of a knowledge graph representation of the natural language based representation of a plurality of functions. Furthermore, the expected data item comprises a portion of the sourcecode of the autoencoder specific engineering program. A transformation objective of the transformer autoencoder model is to transform the input data item into the portion of the sourcecode of the autoencoder specific engineering program.

In another example, the engineering program, which is processed by the transformer autoencoder model, is a sourcecode which implements a plurality of functions in a programming language. The transformer autoencoder model is configured to generate an autoencoder specific engineering program which comprises a natural language description of the plurality of functions. In such a case, the transformer autoencoder model is trained to convert the sourcecode into the natural language description. In such a case, the input data item comprises a portion of a knowledge graph representation of the engineering program and the expected data item comprises a portion of the natural language description of the autoencoder specific engineering program. A transformation objective of the transformer autoencoder model is to transform the input data item into the portion of the natural language description of the autoencoder specific engineering program.

In yet another example, the transformer autoencoder model is configured to generate the autoencoder specific engineering program which comprises a first set of code segments which are coded according to a first set of syntactic rules. The engineering program which is processed by the transformer autoencoder model comprises a second set of code segments which are coded according to a second set of syntactic rules. In such a case, the transformer autoencoder model is trained to convert the second set of code segments into the first set of code segments. In such a case, the input data item comprises a portion of a knowledge graph representation of the engineering program and the expected data item comprises a portion of the first set of code segments which are coded according to the first set of syntactic rules. A transformation objective of the transformer autoencoder model is to transform the input data item into the portion of the first set of code segments which are coded according to the first set of syntactic rules.

In a second step of the second set of steps, the processing unit is configured to apply the encoder model on the received input data item. The encoder model is configured to encode the input data item to generate an encoded data item. The encoded data item is at least one of a graph embedding, a word embedding, a state embedding, or a sequence-to-sequence embedding.

In a third step of the first set of steps, the processing unit is configured to apply the decoder model on the encoded data item to generate an output data item. Initially, the second set of weights of the decoder model are untrained and thus the output data item generated by the decoder model is different from the expected data item.

In a fourth step of the first set of steps, the processing unit is configured to compare the output data item with the expected data item to determine a difference between the output data item and the expected data item. The determined difference is indicative of a degree to which the decoder model is trained.

In a fifth step of the first set of steps, the processing unit is configured to apply an optimizing algorithm on the decoder model to optimize the second set of neural weights of the second set of neurons of the decoder model. In one example, the optimization algorithm is a Stochastic Gradient Descent optimizer algorithm which is configured to optimize the second set of weights with an optimization goal of minimizing the difference between the output data item and the expected data item. Thus the processing unit is configured to iterate the second set of steps until the second set of weights are optimized so that the difference is minimized. Thus, the processing unit is configured to train the decoder model of each transformer autoencoder model by iterative execution of the second set of steps, until the decoder model achieves convergence.

In one example, the processing unit is configured to receive from the user, a plurality of set of training data, in which each set of training data is associated with a specific transformation objective of a plurality of transformation objectives. Examples of the plurality of transformation objectives comprises a first objective to convert a high level language to a machine language, a second objective to translate a sourcecode from a first programming language to a second programming language, a third objective to convert a source code written in a programming language to a description of the source code written in a natural language. The plurality of transformation objectives further comprises a fourth objective of converting a description of a plurality of computer functions into machine language based implementations of the plurality of computer functions.

Thus, a first set of training data, with the first objective, has an input data item associated with a high level language and an expected data item associated with a machine language. Thus, a transformer autoencoder model, trained with the first set of training data, is configured to convert a first engineering program written in the high level language to a second engineering program written in the machine language. Similarly, a second set of training data set, with the second objective, has an input data item associated with a sourcecode in a first programming language and an expected data item associated with a sourcecode in a second programming language. Thus, a transformer autoencoder model trained with the second set of training dataset is configured to convert a sourcecode from a first programming language to a second programming language.

The processing unit is further to iteratively execute the first set of steps and the second set of steps on each transformer autoencoder model of the plurality of transformer autoencoder models based on the received plurality of sets of training data. Since each transfomer autoencoder model is trained with a different set of the plurality of sets of training data, each transformer autoencoder model has a different transformation objective. In one example, each transformer autoencoder model of the plurality of transformer autoencoder models has a data label which is indicative of a specific transformation objective of the transformer autoencoder model. In one example, the specific transformation objective of a transformer autoencoder model comprises information associated with an input specification and an output specification of the transformer autoencoder model. In such a case, the transformer autoencoder model is configured to process an engineering program with the input specification to generate an engineering program with the output specification.

Advantageously, each transformer autoencoder model of the plurality of transformer autoencoder model is configured to perform a specific type of transformation of an engineering program. Furthermore, a user is enabled to train new transformer autoencoder models with new specific transformation objectives by providing an appropriate set of training data to the processing unit. The user is further enabled to select an appropriate transformer autoencoder models from the plurality of transformer autoencoder models to perform a transformation of an engineering program from one form to another.

In the preferred embodiment, the method further comprises training a relational graph neural network to generate a plurality of node embeddings for one or more name graphs. The plurality of node embeddings is indicative of a vector space in which two or more nodes of the one or more name graphs are arranged such that a distance between the two or more nodes, of the one or more name graphs, is inversely proportional to a degree of similarity between the two or more nodes.

The relational graphical neural network is at least one of a Graph Convolutional Network (GCNs), a GraphSAGE network a Graph Attention Network (GAT) or a GraphSAGE++ network. The processing unit is configured to train the relational graphical neural network based on a training dataset comprising a training name graph. The processing unit is configured to train the relational graph neural network by iteratively training the relational graph neural network based on a plurality of nodes of the training name graph. The relational graph neural network is trained to generate each node embedding of the plurality of node embeddings. In one example, the training name graph is received from the user via an input device. Furthermore, a plurality of ground truth labels associated with the training name graph is also received from the user.

In one example, the training name graph has a graph data structure or data loader. The processing unit is configured to load the training name graph into the relational graph neural network. Each node of the plurality of nodes of the training name graph has a feature vector and one or more edge connections. The processing unit is further configured to define the relational graph neural network based on a deep learning framework. Examples of the deep learning framework includes but is not limited to PyTorch or TensorFlow. The processing unit is configured to define the relational graph neural network based on one or more user inputs received via an input device. In one example, the processing unit is configured to define a plurality of structural aspects associated with the relational graph neural network based on the one or more user inputs. The plurality of structural aspects include but is not limited to one or more convolutional layers, a plurality of activation functions, and initial values of a plurality of parameters associated with the relational graph neural network. Furthermore, the processing unit is further configured to select a loss function for the relational graph neural network based on the one or more user inputs. Examples of the loss function include a mean squared error function and a categorical cross-entropy function.

It is noted that the processing unit is configured to receive the plurality of ground truth labels which corresponds to the training name graph. The plurality of ground truth labels are indicative of one or more node embeddings in which the plurality of nodes of the training name graph are arranged such that similar nodes are arranged closer to each other. In other words, in the one or more node embeddings, a distance between two or more nodes are inversely proportional to a degree of similarity between the two or more nodes. Each node of the plurality of nodes of the training name graph corresponds to at least one label of the plurality of ground truth labels. The processing unit is further configured to iterate over the plurality of nodes of the training name graph and the plurality of ground truth labels. In one example, the iteration is performed over the training name graph in a plurality of batches. Each batch of the plurality of batches corresponds to a specific set of ground truth labels of the plurality of ground truth labels. The processing unit is further configured to pass each batch of the plurality of batches through the relational graph neural network to generate a plurality of predicted data items. The processing unit is further configured to determine an optimization loss associated with each batch of the plurality of batches by computing difference between the plurality predicted data items and the specific set of ground truth labels which correspond to the batch. The processing unit is further configured to iteratively optimize the relational graph neural network by application of a parameters optimization algorithm on the relational graph neural network and the determined optimization loss. The processing unit is thus configured to train the relational graph neural network by use of a supervised learning method. The relational graph neural network is thus trained to generate a set of node embeddings for the training name graph such that a distance between a set of nodes, in the set of node embeddings, is inversely proportional to a degree of similarity between the set of nodes.

In the preferred embodiment, the method further comprises receiving from a user, by a processing unit, a user request to generate the specific engineering program from information associated with at least one engineering program. The user request is received from user via an input device. In one example, the processing unit is configured to receive the at least one engineering program from the user.

In one example, the user request is a request to generate the specific engineering program in accordance with a first set of syntactic and semantic rules associated with a first specification. Furthermore, the user request comprises information associated with a second specification of the at least one engineering program. The second specification is indicative of a second set of syntactic and semantic rules based on which the at least one engineering program has been coded by a human coder.

In another example, the method further comprises receiving, by the processing unit, the plurality of compatibility parameters associated with the computing platform. In other words, the specific engineering program is compatible with the computing environment if the first specification, of the specific engineering program, matches with the plurality of compatibility parameters. The method further comprises analyzing, by the processing unit, the second specification associated with the at least one engineering program, and the plurality of compatibility parameters associated with the computing platform. In one example, to analyse the second specification, the processing unit is configured to compare the second set of syntactic and semantic rules with the received plurality of compatibility parameters. In a case where the second set of syntactic and semantic rules fails to match with the received plurality of compatibility parameters, the processing unit (202) determines that the at least one engineering program is incompatible with the computing platform.

In a case where where the second set of syntactic and semantic rules matches with the received plurality of compatibility parameters, the processing unit (202) determines that the at least one engineering program is compatible with the computing platform. In a case where the at least one engineering program is determined to be incompatible with the computing platform, the processing unit is configured to generate a user notification that the at least one engineering program is incompatible. The processing unit is further configured to receive a second specification from the user such that the second specification matches with the plurality of compatibility requirements of the computing platform.

The first specification is different from the second specification. In one example, the user request comprises information associated with a specific transformation objective to convert the at least one engineering program into the specific engineering program.

In one example, the at least one engineering program comprises a code based implementation of a plurality of computer functions. Example of the plurality of computer functions include but is not limited to a mathematical function, an engineering function, and an industrial control function. In such a case, the second specification comprises a set of syntactic and semantic rules of the code based implementation. Further, the user specified engineering program is a natural language based description of the plurality of computer functions. In such a case, the first specification comprises a plurality of grammatical rules associated with the natural language based description of the plurality of computer functions. In one example, the at least one engineering program is selected by a user from a plurality of engineering programs. The user is enabled to select the at least one engineering program from the plurality of engineering programs via a user input device.

In the preferred embodiment, the method further comprises analyzing, by the processing unit, the at least one engineering program based on an application of a machine learning algorithm on the at least one engineering program. In one example, the machine learning algorithm is a natural language processing algorithm. In a case where the at least one engineering program comprises words, code snippets and machine language, the natural language processing algorithm is configured to detect the words, code snippets and machine language in the at least one engineering program. In one example, the natural language processing algorithm is at least one of a named entity recognition algorithm, a text summarization algorithm, and a tokenization algorithm. In another example, the machine learning algorithm is a graphical pattern recognition algorithm. In a case where the at least one engineering program is a graphical program such as ladder based engineering progam, then the graphical pattern recognition algorithm is configured to determine one or more graphical objects in the at least one engineering program.

The method further comprises determining, by the processing unit, program data from the at least one engineering program based on the analysis. The program data comprises information associated with the at least one engineering program such as words, code snippets, variables, functions, conditional statements, programming blocks, classes, nodes, and graphical objects. The method further comprises generating a plurality of tokens from the at least one engineering program by application of a tokenization algorithm. Each token of the plurality of tokens comprises at least one constituent data item of the at least one engineering program. Thus each token of the plurality of tokens is at least one of word, a code snippet, a variable, a function, a conditional statement, a programming block, a class, a node, and a graphical object.

In the preferred embodiment, the method further comprises applying, by the processing unit, a dependency parsing algorithm on the plurality of tokens to analyze a syntactic structure of interdependencies between one or more tokens of the plurality of tokens. Furthermore, the dependency parsing algorithm is applied on the at least one engineering program. The dependency parsing algorithm is configured to identify a plurality of interdependencies between two or more tokens of the plurality of tokens based on the application of the dependency parsing algorithm on the at least one engineering program. The plurality of interdependencies comprise a plurality of grammatical, syntactic, and semantic relationships between two or more tokens of the plurality of tokens. It is noted that each token of the plurality of tokens is indicative of a constituent data item of the at least one engineering program. In one example, the processing unit is configured to filter the plurality of tokens with one or more named entity recognition (NER) algorithms to identify mentions of each of a plurality of constituent data items in the at least one engineering program.

The method further comprises analyzing, by the processing unit, the identified mentions of the plurality of tokens. The processing unit is further configured to assign a plurality of semantic roles to the identified mentions of the plurality of tokens. The plurality of semantic roles are assigned by application of a semantic role labelling algorithm on the identified mentions of the plurality of tokens. The semantic roles of each token of the plurality of tokens is indicative of a relationship of each token with other tokens of the plurality of tokens. Examples of the semantic role labelling algorithms include, but is not limited to AllenNLP Algorithm or PropBank project algorithm.

The processing unit is configured to generate a plurality of dependency trees based on the determined plurality of interdependencies between two or more tokens of the plurality of tokens. Each dependency tree of the plurality of dependency trees is indicative of a plurality of interdependencies between a specific token of the plurality of tokens and other tokens extracted from the at least one engineering program.

In the preferred embodiment, the method further comprises generating, by the processing unit, a name graph based on the plurality of dependency trees. In one example, the processing unit is configured to concatenate the plurality of dependency trees to generate the name graph based on a set of rules. The set of rules is received by the processing unit, from the user via an input device. In another example, the processing unit is configured to combine the plurality of dependency trees by application of a mathematical operation such as a union operation or an intersection operation on the plurality of dependency trees. The processing unit is configured to merge the plurality of dependency trees based on an analysis of the assigned plurality of semantic roles.

The name graph comprises a plurality of nodes. Each node of the plurality of nodes comprises information associated with a specific token of the plurality of tokens of the at least one engineering program. Thus, the name graph comprises information associated with the plurality of interdependencies between the plurality of tokens extracted from the at least one engineering program. Thus, the generated name graph comprises information associated with a structure of the at least one engineering program.

Furthermore, it is noted that the plurality of tokens indicate a plurality of constituent data items of the at least one engineering program, such as words, code snippets, variables, functions, conditional statements, programming blocks, classes, nodes, and graphical objects within the at least one engineering program. A plurality of interdependencies between the plurality of constituent data items of the at least one engineering program may indicate a plurality of data flow and a plurality of control flow within the at least one engineering program. Thus, the plurality of interdependencies between the plurality of tokens indicate the plurality of data flow and the plurality of control flow within the at least one engineering program. In other words, the name graph comprises information associated with the plurality of data flow and the plurality of control flow within the at least one engineering program.

In the preferred embodiment, the method further comprises applying the trained relational graph neural network on the name graph to generate a set of node embeddings. The set of node embeddings is indicative of a vector space in which the two or more nodes of the plurality of nodes of the name graph are arranged in a specific arrangement. In the specific arrangement, a distance between two or more nodes of the plurality of nodes is inversely proportional to a degree of similarity between the two or more nodes. In other words, in the set of node embeddings, each node embedding comprises information associated with a specific node of the plurality of nodes, as well as information associated with neighbouring nodes of the specific node.

It is noted that each node comprises information associated with at least one token of the plurality of tokens of the at least one engineering program. Advantageously, the processing unit is configured to capture not only information associated with each node of the plurality of nodes of the name graph, but also information associated with relationship of each node with with other nodes of the plurality of nodes. It is further noted that the plurality of nodes comprises information associated with interdependencies between words, code segments, code snippets, variables, functions, and other constituent elements of the at least one engineering program. Thus the set of node embeddings capture interelationships between each constituent data item of the plurality of constituent data items of the at least one engineering program, to other constituent data items of the at least one engineering program.

In the preferred embodiment, the method further comprises generating, by the processing unit, a knowledge graph based on the generated set of node embeddings. In other words, the knowledge graph is generated based on the information associated with the at least one engineering program.

In the preferred embodiment, the method further comprises applying, by the processing unit, a flattening algorithm on the generated knowledge graph. Examples of the flattening algorithms include but is not limited to a tree traversal algorithm, a graph partitioning algorithm, a semantic flattening algorithm, a dimensionality reduction algorithm, and a graph compression algorithm. The flattening algorithm is configured to generate a flattened knowledge graph based on the application of the flattening algorithm on the knowledge graph. The flattened knowledge graph is a simplified and condensed representation of the knowledge graph. The flattened knowledge graph has information associated with the plurality of node embeddings of the plurality of nodes of the name graph. Thus, the flattened knowledge graph not only comprises information associated with each node of the plurlaity of nodes, but also information associated with interelationships between each node to every other node in the plurality of nodes of the name graph. Thus in other words, the flattened knowledge graph comprises contextual information associated with a plurality of constituent data items of the at least one engineering program.

In the preferred embodiment, the method further comprises comparing, by the processing unit, a specific transformation objective associated with the user request to a plurality of data labels in the plurality of transformer autoencoder models. It is noted that a data label of each transformer autoencoder model of the plurality of transformer autoencoder model comprises information associated with a specific transformation objective of the transformer autoencoder model.

In the preferred embodiment, the method further comprises selecting, by the processing unit, a transformer autoencoder model from the plurality of transformer autoencoder models based on the comparison. In one example, the selected transformer autoencoder model has a specific transformation objective which matches with the specific transformation objective associated with the user request. In other words, the selected transformer autoencoder model is configured to convert the knowledge graph into the specific engineering program.

In the preferred embodiment, the method further comprises applying, by the processing unit, the selected transformer autoencoder model on the flattened knowledge graph to generate the user specified engineering program. In other words, the processing unit is configured to apply the selected transformer autoencoder model on the knowledge graph.

In the preferred embodiment, the method further comprises generating, by the processing unit, the specific engineering program from the at least one engineering program based on the application of the selected transformer autoencoder model on the knowledge graph of the at least one engineering program. Thus, the specific engineering program is generated in accordance with the second specification and is thus compatible with the computing platform.

Advantageously, the transformer autoencoder model is applied on the knowledge graph that comprises information associated with the plurality of interdependencies between the plurality of constituent data items of the at least one engineering program. Thus, the specific engineering program is generated based on knowledge on the at least one engineering program as well as information on the plurality of interdependencies between the plurality of constituent data items of the at least one engineering program. Furthermore, the specific engineering program is generated based on the set of node embeddings in which each node of the plurality of nodes comprises information associated with neighbouring nodes of the node. Thus, interelationships between the plurality of constituent elements of the at least one engineering program are faithfully capured and represented in the generated specific engineering program. Thus, a huge amount of labour and time which otherwise would have been spent in understanding the plurality of interdependencies between the plurality of constituent data items is thus eliminated. Furthermore, a huge amount of labour and time is saved as the specific engineeering program is generated automatically without manual intervention.

Advantageously, the knowledge graph which is further indicative of a plurality of similarities between the plurality of constituent data items of the at least one engineering program. Thus, similar nodes in a plurality of nodes of the knowledge graph are grouped together. Thus, the similar nodes of the plurality of nodes of the knowledge graph are translated together. Thus, the plurality of similarities between the plurality of constituent data items are captured faithfully in the specific engineering program. Furthermore, the automation module is enabled to optimize code snippets associated with the plurality of constituent data items based on the plurality of similarities between the plurality of constituent data items of the at least one engineering program.

The method further comprises executing the generated specific engineering program on the computing platform.

Advantageously, the specific engineering program is compatible with the computing platform. Further advantageously, a human coder is spared from a labour of manually recoding the at least one engineering program to generate the specific engineering program. Thus, a plurality of tasks such as upgradation and migration of the computing platform is simplified.

In one example, the at least one engineering program is coded in accordance with a first coding policy. The user request comprises a specific transformation objective to generate the specific engineering program based on a second coding policy. The first coding policy and the second coding policy comprises one or more syntactic rules for coding the user specified engineering program and the at least one engineering program. The processing unit is configured to select the transformer autoencoder model which is configured to convert a first engineering program coded with the first coding policy to a second engineering program coded with the second coding policy. The processing unit is further configured to apply the at least one transformer autoencoder model on a knowledge graph associated with the at least one engineering program to generated the specific engineering program.

In another example, the at least one engineering program comprises a natural language based description of a plurality of functions. The user request comprises a specific transformation objective to generate the specific engineering program which comprises a machine language based implementation of the plurality of functions. The processing unit is configured to receive a training data set configured to train at least one transformer autoencoder model to convert a first engineering program which comprises a natural language description of at least one function to a second engineering program comprising a machine learning based representation of the at least one function. The processing unit is further configured to apply the at least one transformer autoencoder model on a knowledge graph associated with the at least one engineering program to generate the specific engineering program which comprises the machine language based implementation of the plurality of functions.

In yet another example, the at least one engineering program comprises a machine language based implementation of a plurality of functions. The user request comprises a specific transformation objective to generate the specific engineering program which comprises a natural language based description of the plurality of functions. The processing unit is configured to receive a training data set configured to train at least one transformer autoencoder model to generate a first engineering program which comprises a natural language description of at least one function from a second engineering program comprising a machine learning based representation of the at least one function. The processing unit is further configured to apply the at least one transformer autoencoder model on a knowledge graph associated with the at least one engineering program to generate the specific engineering program which comprises the natural language based description of the at least one function.

In yet another example, the at least one engineering program is a graphical program comprising a plurality of programming blocks. The user request comprises a specific transformation objective to generate the specific engineering program which comprises a machine language based representation of the graphical program. The processing unit is configured to receive a training data set configured to train at least one transformer autoencoder model to generate a first engineering program which comprises a machine language representation of at least one programming block. The at least one transformer autoencoder model is trained to generate the first engineering program from a second engineering program which is a graphical program comprising the at least one programming block. The processing unit is further configured to apply the at least one transformer autoencoder model on a knowledge graph associated with the at least one engineering program to generated the specific engineering program which comprises a machine language based representation of the graphical program.

In yet another example, the at least one engineering program is a machine learning based representation of a plurality of computer functions. The user request comprises a specific transformation objective to generate the user specified engineering program which comprises an algorithmic flowchart indicative of the plurality of computer functions. The processing unit is configured to receive a training data set configured to train at least one transformer autoencoder model to generate a first engineering program which comprises a machine language representation of at least one programming block. The at least one transformer autoencoder model is trained to generate the first engineering program from a second engineering program which is a machine learning based representation of at least one computer function. The processing unit is further configured to apply the at least one transformer autoencoder model on a knowledge graph associated with the at least one engineering program to generate the user specified engineering program which comprises the algorithmic flowchart indicative of the plurality of computer functions.

The object of the present invention is also achieved by an engineering system for generating a specific engineering program which is compatible with a computing platform. The engineering system comprises one or more processor(s) and a memory coupled to the processor. The memory comprises an automation module stored in the form of machine-readable instructions executable by the processor. The automation module is configured for performing the method as described above.

The object of the present invention is also achieved by an industrial environment. The industrial environment comprising an engineering system, a technical installation comprising one or more physical components and one or more client devices communicatively coupled to the engineering system and the technical installation. The engineering system is configured to perform the above described method steps.

The object of the present invention is also achieved by a computer-program product having machine-readable instructions stored therein, that when executed by one or more processor(s), cause the one or more processor(s) to perform method steps as described above.

The object of the present invention is also achieved by a signal with embedded machine-readable instructions, the signal being received from a computer system, characterized in that when executed by a processing unit, the machine-readable instructions causes a processing unit perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:

FIG 1       is a block diagram of an industrial environment capable of generating an engineering program from information associated with at least one engineering program, according to an embodiment of the present invention;

FIG 2       is a block diagram of an engineering system, such as those shown in FIG. 1, in which an embodiment of the present invention can be implemented;

FIG 3       is a block diagram of an automation module, such as those shown in FIG 2, in which an embodiment of the present invention can be implemented;

FIG 4A-C   is a process flowchart illustrating an exemplary method of generating an engineering program which is compatible with a computing platform, according to an embodiment of the present invention;

FIG 5       a process flowchart illustrating an exemplary method of training an encoder of a transformer autoencoder model, according to an embodiment of the present invention;

FIG 6       a process flowchart illustrating an exemplary method of training a decoder of a transformer autoencoder model, according to an embodiment of the present invention;

FIG 7A-C   is an exemplary illustration of generating an engineering program from information associated with at least one engineering program, according to an embodiment of the present invention;

FIG 8A-C   is an exemplary illustration of a plurality of use cases of an automation module according to an embodiment of the present invention; and

FIG 9       is an exemplary illustration of a user interface for displaying an input and an output of an automation module according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

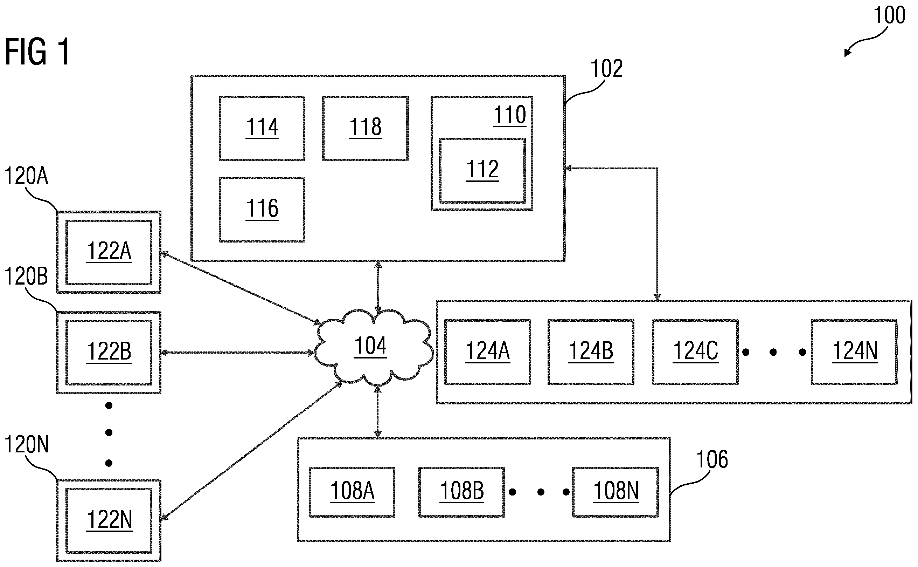

FIG 1 is a block diagram of an industrial environment 100 capable of generating a specific engineering program which is compatible with a specific computing platform 110, according to an embodiment of the present invention. In FIG 1, the industrial environment 100 includes an engineering system 102 which is configured to control an industrial plant 106 and one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The engineering system 102 is communicatively connected to the industrial plant 106 via the network 104 (such as Local Area Network (LAN), Wide Area Network (WAN), Wi-Fi, Internet, any short range or wide range communication). The engineering system 102 is also connected to the one or more client devices 120AN via the network 104. The industrial plant 106 comprises a plurality of industrial devices 108A-N which are controlled by the engineering system 102 by execution of one or more engineering programs in a controller device such as a programmable logic controller. Examples of the plurality of industrial devices 108A-N includes but is not limited to a control valve, a motor, a server, a robot, a switch, human machine interfaces (HMIs), motors, valves, pumps, actuators, sensors and other industrial devices in the industrial plant 106.

The computing platform 110 refers to any computing infrastructure which is capable of executing one or more engineering programs. Examples of the computing platform 110 includes, but is not limited to a operating system based platform, a cloud computing platform, a hardware based platform, and a programmable logic controller based platform. In one example, the computing platform 110 may execute the specific engineering program only if the engineering program is coded in compliance with a specification associated with the computing platform 110. The specification comprises information associated with a plurality of syntactic and semantic rules, which define a manner in which the one or more engineering programs should be coded, so that the one or more engineering programs are compatible with the computing platform 110. Thus, the engineering program has to be coded manually by the coder in line with the plurality of syntactic and semantic rules.

An engineering program is hereafter referred to as being compatible with the computing platform 110 if the specific engineering program fulfills a plurality of compatibility requirements of the computing platform 110. The plurality of compatibility requirements includes but is not limited to a programming language compatible with the computing platform 110, a syntax compatible with the specific computing platform 110, and a program length compatible with the specific computing platform 110. The plurality of compatibility requirements comprises a set of syntactic and semantic rules. The set of syntactic and semantic rules comprises a rule for naming progrm variable, a rule for naming program data structures, a rule for generating conditional and loop statements and a rule for arranging one or more code elements in the engineering program. In other words, the engineering program is compatible with the specific computing platform 110 if the engineering program is coded in a specific specification which encompases the set of syntactic and semantic rules.

The computing platform 110 enables functionalities such as data reception, data processing, data rendering, data communication, etc. using the hardware resources and an operating system (OS) and delivers the aforementioned services using the application programming interfaces deployed therein. The computing platform 110 may comprise a combination of dedicated hardware and software built on top of the hardware and the OS.

The one or more client devices 120A-N may be a desktop computer, laptop computer, tablet, smart phone and the like. Each of the client devices 120A-N is provided with an engineering tool 122A-N for generating and/or editing a plurality of engineering programs in the engineering system 102. In one example, the plurality of engineering program comprises computer executable programming code used to control the plurality of industrial devices 108A-N in the industrial plant 106. Examples of the industrial plant 106 includes but is not limited to manufacturing plants, power plants, and recycling plants.

The client devices 120A-N can access the engineering system 102 for automatically generating one or more engineering programs. The client devices 120A-N can access cloud applications (such as providing performance visualization of execution of the plurality of engineering programs via a web browser). Throughout the specification, the terms "client device" and "user device" are used interchangeably.

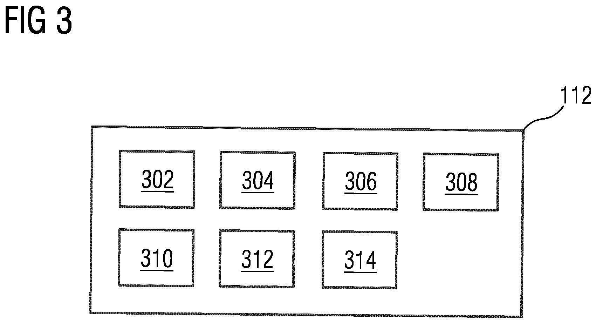

The engineering system 102 may be a standalone server deployed at a control station or may be a remote server on a cloud computing platform. In one example, the engineering system 102 may be a cloud-based engineering system. The engineering system 102 is capable of delivering applications (such as cloud applications) for managing the industrial plant 106 comprising the plurality of industrial devices 108A-N. The engineering system 102 may comprise an automation module 112, a server 114 including hardware resources and an operating system (OS), a network interface 116 and a database 118. The network interface 116 enables communication between the engineering system 102 and the client device(s) 120A-N. The interface (such as cloud interface) (not shown in FIG 1) may allow the engineers at the one or more client device(s) 120A-N to access the plurality of engineering programs stored at the engineering system 102 and perform one or more actions on the plurality of engineering programs. The server 114 may include one or more servers on which the OS is installed. The server 114 may comprise one or more processors, one or more storage devices, such as, memory units, for storing data and machine-readable instructions for example, applications and application programming interfaces (APIs), and other peripherals required for providing computing (such as cloud computing) functionality. The automation module 112 is configured for generating engineering programs. Details of the automation module 112 is explained in FIG. 3.

The database 118 stores the information relating to the industrial plant 106 and the client device(s) 120A-N. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the platform 110. The database 118, according to another embodiment of the present invention, is a location on a file system directly accessible by the automation module 112. The database 118 is configured to store industrial automation project files, engineering programs, object behavior model, parameter values associated with the plurality of industrial devices 108A-N, test results, simulation results, status messages, one or more simulation instances, graphical programs, program logics, program logic patterns, and industrial device properties, program update messages and the like.

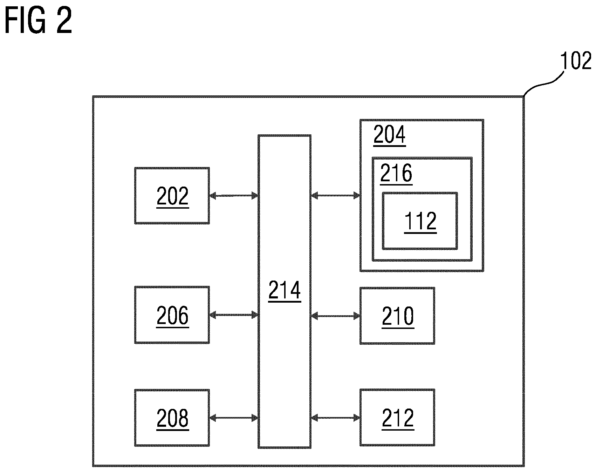

FIG 2 is a block diagram of an engineering system 102, such as those shown in FIG 1, in which an embodiment of the present invention can be implemented. In FIG 2, the engineering system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the automation module 112 stored in the form of machine-readable instructions on any of the above-mentioned storage media and may be in communication with and executed by the processing unit 202.

The automation module 112 is configured to generate a specific engineering program from information associated with at least one engineering program. The information associated with the at least one engineering program may be received from a user. The at least one engineering program is coded in accordance with a first specification. The generated specific engineering program is coded in accordance with a second specification. The second specification comprises a set of syntactic and semantic rules which are aligned with a plurality of compatibility requirements of the specific computing platform 110. Thus, the generated specific engineering program is compatible with the computing platform 110.

In one example, the at least one engineering program comprises a programming language based implementation of one or more functions. The one or more functions are described in at least one of a high level language such as IECPL, a machine language such as Assembly language. Furthermore, in the said example, the specific engineering program comprises a natural language based description of the one or more functions. In such a case, the automation module 112 is configured to generate the specific engineering program which comprises the natural language based description of the one or more functions, from the at least one engineering program.

In another example, the at least one engineering program is a graphical program which is indicative of a plurality of functions, depicted as graphical programming blocks. The specific engineering program is a machine language based implementation of the plurality of functions. In such a case, the automation module 112 is configured to generate the specific engineering program which comprises the machine language based implementation of the plurality of functions, from the graphical program which is indicative of the plurality of functions.

When executed by the processing unit 202, the automation module 112 causes the processing unit 202 to train a plurality of transformer autoencoder models 124A-N. Each transformer autoencoder model of the plurality of transformer autoencoder models 124A-N is an artifical intelligence model which is configured to generate an autoencoder specific engineering program from information associated with an engineering program stored in the engineering system 102. The autoencoder specific engineering program is of a first specification and the engineering program is of a second specification. The first specification and the second specification are indicative of a plurality of syntactic and semantic rules associated with the autoencoder specific engineering program and the engineering program respectively. The autoencoder specific engineering program comprises information arranged in accordance with the first specification and the engineering program comprises information arranged in accordance with the second specification.

Each transformer autoencoder model of the plurality of transformer autoencoder model has a specific transformation objective. The specific transformation objective of a transformer autoencoder model is indicative of an input specification and an output specification of the transformer autoencoder model. For example, each transformer autoencoder model of the plurality of transformer autoencoder models 124A-N is configured to convert information associated with an engineering program with an input specification into a autoencoder specific engineering program of a specific specification. The specific specification indicates a set of semantic and syntactic rules based on which one or more code elements of the autoencoder specific engineering program are arranged in the autoencoder specific engineering program. The one or more code elements include variables, code snippets, functions, classes, loop statements, words and graphical objects.

Each transformer autoencoder model of the plurality of transformer autoencoder models 124A-N has a specific transformation objective. The specific transformation objective of each transformer autoencoder model is indicative of an input specification and an output specification of the transformer autoencoder model. The input specification is indicative of a format of the engineering program, the information associated with which, is converted by the transformer autoencoder model. The output specification is indicative of a format of the autoencoder specific engineering program which is generated by the transformer autoencoder model by conversion of the engineering program.

The information associated with the engineering program comprises a plurality of node embeddings of a knowledge graph associated with the engineering program. The plurality of node embeddings is a vector space representation of a plurality of nodes of a name graph of the engineering program. The name graph comprises information associated with one or more constituent data items of the engineering program, such as words, code segments, graphical objects, functions, variables, comments, classes, data structures, and code snippets and a plurality of interdependencies between the one or more constituent data items. In the vector space representation of the plurality of nodes, the plurality of nodes are arranged in such a manner that a distance between two or more nodes in the vector space representation is inversely proportional to a degree of similarity between the two or more nodes of the plurality of nodes. Thus, each node in the plurality of node embeddings carry information about the node themselves and further carry information about neighbouring nodes. Furthermore, in the vector representation, similar nodes are spatially grouped together.

Each transformer autoencoder model of the plurality of transformer autoencoder models 124A-N comprises an encoder model and a decoder model. The encoder model of each transformer autoencoder model comprises a first set of neurons and a first set of neural weights. The encoder model is at least one of a Graph Convolutional Networks, GraphSAGE (Graph Sample and Aggregated Embedding, or a Graph Isomorphism Network (GIN). The decoder model of each transformer autoencoder model comprises a second set of neurons and a second set of neural weights. Examples of the decoder model includes but is not limited to a Feedforward Decoder model, a Convolutional Decoder model, a Graph Decoder model, or a Recurrent Generative Model based decoders.

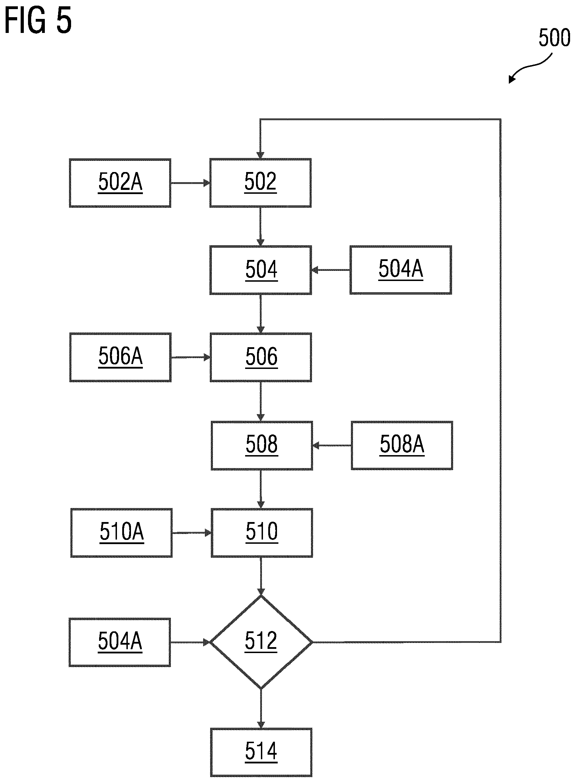

The automation module 112 causes the processing unit 202 is configured to train the encoder model for each transformer autoencoder model of the plurality of transformer autoencoder models 124A-N by iterative execution of a first set of steps. Each iterative execution of the first set of steps trains an encoder model of a specific transformer autoencoder model of the plurality of transformer autoencoder models 124A-N. The first set of steps is explained with reference to FIG. 5.

With reference to FIG. 5, a flowchart 500 depicting the first set of steps to train an encoder model 504A of a transformer autoencoder model is illustrated.

To train an encoder model of a specific transformer autoencoder model of the plurality of transformer autoencoder models, the processing unit 202 executes a first step 502 of a first set of steps. In the first step 502 of the first set of steps, a plurality of input data items 502A are received by the processing unit 202 from a user or from the database 118. The plurality of input data items 502A comprises a plurality of portions of a knowledge graph associated with information associated with an engineering program. In one example the information associated with the engineering program comprises at least one of a programming code, a natural language based description of a plurality of computer functions, and a graphical program comprising a plurality of graphical programming blocks.

In a second step 504 of the first set of steps, the encoder model 504A is applied by the processing unit 202, on the plurality of input data items 502A. The encoder model 504A is configured to encode the plurality of input data items 502A to generate a plurality of encoded data items. The plurality of encoded data items is at least one of a graph embedding, a word embedding, state embeddings, or sequence-to-sequence embedding.

In a third step 506 of the first set of steps, a decoder model 506A is applied by the processing unit 202, on the plurality of encoded data items to generate a plurality of reconstructed data items. The decoder model 506A is configured to reconstruct the plurality of input data items 502A from the plurality of encoded data items. However, the decoder model 506A is unable to generate a faithful reconstruction of the plurality of input data items as there is a possibility of reconstruction loss for the transformer autoencoder model. Thus, the generated plurality of reconstructed data items is different from the plurality of input data items.

In a fourth step 508 of the first set of steps, the plurality of input data items 502A are compared by the processing unit 202 with the plurality of reconstructed data items. In one example, the plurality of input data items 502A is compared with the plurality of reconstructed data items by application of a comparison algorithm 508A such as cosine similarity algorithms, Levenshtein distance, Jaccard similarity, or Sounde algorithms on the plurality of reconstructed data items and the plurality of input data items 502A. The processing unit 202 is further configured to determine a reconstruction loss parameter based on the comparison. In one example, the reconstruction loss parameter is indicative of a plurality of differences between the plurality of input data items 502A and the plurality of reconstructed data items. The reconstruction loss parameter is indicative of a reconstruction loss associated with the transformer autoencoder model. Thus the reconstruction loss parameter is indicative of data loss which has occured during application of the transformer autoencoder model on the plurality of input data items 502A.

In a fifth step 510 of the first set of steps, an optimizing algorithm 510A is applied by the processing unit 202 on the encoder model 504A to optimize a first set of neural weights of a first set of neurons of the encoder model 504A. In one example, the optimization algorithm 510A is a Stochastic Gradient Descent optimizer algorithm which is configured to optimize the first set of weights with an optimization goal of minimizing the reconstruction loss of the transformer autoencoder model. In other words, the processing unit 202 is configured to optimize the first set of neural weights of the encoder model 504A by application of the optimization algorithm 510A on the first set of neural weights based on the determined reconstruction loss parameter. The processing unit 202 is configured to generate a newly trained encoder model 504B by application of the optimization algorithm 510A.

At a sixth step 512 of the first set of steps, the processing unit 202 is configured to apply the newly trained encoder model 504B and the decoder model 506A on the plurality of input data items 502A to generate a plurality of new reconstructed data items. The processing unit 202 is further configured to generate a new reconstruction loss parameter based on the plurality of input data items 502A and the plurality of new reconstructed data items. The processing unit 202 further compares the new reconstruction loss parameter with a threshold reconstruction loss parameter. In one example, the threshold reconstruction loss parameter is received from a user via an input device. In a case where the new reconstruction loss parameter is greater than the threshold reconstruction loss parameter, then a control flow passes to the first step 502. Furthermore, the processing unit 202 is configured to run the first set of steps for one more iteration. In a case where the new reconstruction loss parameter is lesser than the threshold reconstruction loss parameter, then the control flow passes to a seventh step 514 of the first set of steps. At the seventh step 514, a training process of the encoder model 504B is completed.

Thus the processing unit 202 is configured to iterate the first set of steps until the first set of weights are optimized such that the reconstruction loss is one of minimized or is lower than the threshold reconstruction loss. Thus, the processing unit 202 is configured to train the encoder model 504A of each transformer autoencoder model by iterative execution of the first set of steps. After a completion of training of the encoder model 504A, the transformer autoencoder model is configured to encode and faithfully decode the plurality of input data items 502A.

Referring back to FIG. 2, the automation module 112 is configured to train the decoder model of the transformer autoencoder model after the encoder model has been trained.

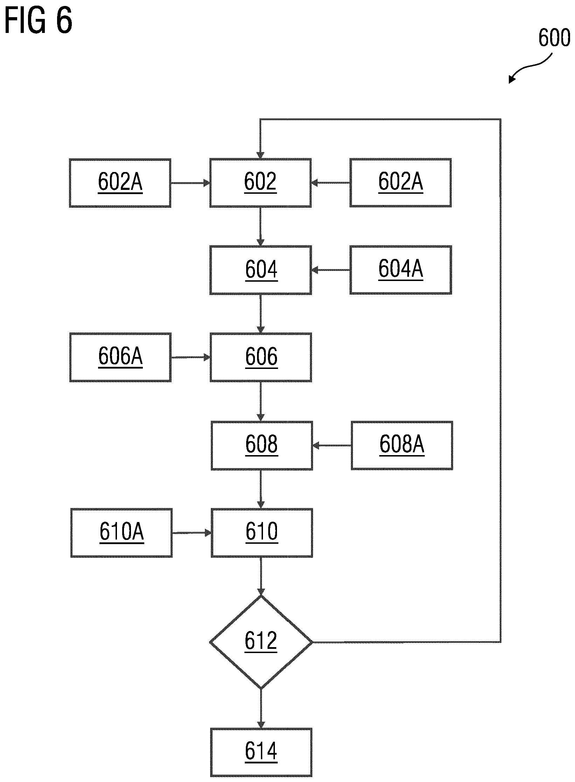

Referring to FIG. 6, FIG. 6 illustrates a flowchart 600 indicative of the second set of steps executed by the processing unit 202 to train a decoder model 608A of each transformer autoencoder model of the plurality of transformer autoencoder models.

The decoder model 608A is trained by the processing unit 202 by iteratively executing a second set of steps. To initiate a training process of the decoder model 608A, the processing unit executes a first step 602 of the second set of steps. In the first step 602 of the second set of steps, an input data item 602A is received by the processing unit 202. The input data item 602A is a portion of a knowledge graph associated with an engineering program. The knowledge graph comprises information associated with a plurality of constituent data items of the engineering program and a set of interrelationships between the plurality of constituent data items of the engineering program. The knowledge graph comprises a plurality of node embeddings in which distance between two or more nodes is inversely proportional to a degree of similarity between the two or more nodes. In one example, the input data item 602A comprises at least one node embedding of the plurality of node embeddings of the knowledge graph. In another example, the input data item 602A is at least one constituent data item of the plurality of constituent data items of the engineering program. The plurality of constituent data items comprises variables, functions, classes, loop statements and conditional statements of the engineering program.

In the first step 602, an expected data item 602B is received by the processing unit 202 from a user or from the database 118. A training objective of the processing unit 202 is to train the transformer autoencoder model to convert the engineering program to an autoencoder specific engineering program. The expected data item 602B is a portion of the autoencoder specific engineering program which corresponds to the input data item 602A.

It is noted with reference to FIG. 5 that after training of the encoder model 504A of a transformer autoencoder model, the transformer autoencoder model is configured to encode an input and then to faithfully decode the encoded input to generate a reconstructed input. Thus, referring back to FIG. 6, the transformer autoencoder model is configured to encode the input data item 602A and then to faithfully decode an encoded input data item to generate a reconstructed input data item. An objective of the training process of the decoder model 606A is to train the the decoder model 606A such that the transformer autoencoder model is configured to generate the expected data item 604B rather than the reconstructed input data item. In other words, the objective of the training process is to train the transformer autoencoder model to convert the input data item 602A to the expected data item 602B. In one example, the user generates the expected data item 602B manually and the processing unit 202 receives the expected data item 602B from the user. In other words, in a case where the input data item 602A corresponds to a specific portion of the engineering program, the expected data item 602B corresponds to a specific portion of the autoencoder specific engineering program. Thus, the expected data item is indicative of an expected and desired output of the transformer autoencoder model, when the transformer autoencoder model is applied on the input data item 602A.

In one example, the transformer autoencoder model is configured to generate an autoencoder specific engineering program which is a natural language based representation of a plurality of functions. Further, in the example, the engineering program which is to be processed by the transformer autoencoder model comprises sourcecode which implements the plurality of functions in a programming language. In such a case, the transformer autoencoder model is trained to convert the natural language based representation into the sourcecode. In such a case, the input data item 602A comprises a portion of a knowledge graph representation of the engineering program and the expected data item 602B comprises a portion of the sourcecode of the autoencoder specific engineering program. A transformation objective of the transformer autoencoder model is to transform the input data item 602A into the portion of the sourcecode of the autoencoder specific engineering program.

In another example, an engineering program which is processed by the transformer autoencoder model is a sourcecode which implements a plurality of functions in a programming language. The transformer autoencoder model is configured to generate an autoencoder specific engineering program which comprises a natural language description of the plurality of functions. In such a case, the transformer autoencoder model is trained to convert the sourcecode into the natural language description. In such a case, the input data item 602A comprises a portion of a knowledge graph representation of the engineering program and the expected data item 602B comprises a portion of the natural language description of the autoencoder specific engineering program. A transformation objective of the transformer autoencoder model is to transform the input data item 602A into the portion of the natural language description of the first engineering program.

In yet another example, the transformer autoencoder model is configured to generate the autoencoder specific engineering program which comprises a first set of code segments which are coded according to a first set of syntactic rules. The engineering program which is processed by the transformer autoencoder model comprises a second set of code segments which are coded according to a second set of syntactic rules. In such a case, the transformer autoencoder model is trained to convert the second set of code segments into the first set of code segments. In such a case, the input data item 602A comprises a portion of a knowledge graph representation of the engineering program and the expected data item 602B comprises a portion of the first set of code segments which are coded according to the first set of syntactic rules. A transformation objective of the transformer autoencoder model is to transform the input data item 602A into the portion of the first set of code segments which are coded according to the first set of syntactic rules.

In a second step 604 of the second set of steps, an encoder model 604A is applied by the processing unit 202 on the received input data item 602A. The encoder model 604A is configured to encode the input data item 602A to generate an encoded data item. The encoded data item is at least one of a graph embedding, a word embedding, a state embedding, or a sequence-to-sequence embedding.

In a third step 606 of the second set of steps, the processing unit 202 is configured to apply the decoder model 606A on the encoded data item to generate an output data item. In an initial state of training, a second set of weights of the decoder model 606A are untrained and thus the output data item generated by the decoder model 606A may be different from the expected data item.

In a fourth step 608 of the second set of steps, the processing unit 202 is configured to compare the output data item with the expected data item 602B to determine an optimization difference between the output data item and the expected data item 602B. The determined optimization difference is indicative of a degree to which the decoder model 606A is trained. The output data item is compared with the expected data item 602B by application of a comparison algorithm 608A on the output data item and the expected data item 602B.

In a fifth step 610 of the second set of steps, the processing unit 202 is configured to apply an optimizing algorithm on the decoder model 606A to optimize the second set of neural weights of the second set of neurons of the decoder model 606A. In one example, the optimization algorithm is a Stochastic Gradient Descent optimizer algorithm which is configured to optimize the second set of weights with an optimization goal of minimizing the optimization difference between the output data item and the expected data item 604B. Thus the processing unit 202 is configured to iterate the second set of steps until the second set of weights are optimized so that the optimization difference is minimized. Thus, the processing unit 202 is configured to train the decoder model 606A of each transformer autoencoder model by iterative execution of the second set of steps, until the decoder model 606A achieves convergence.

At a sixth step 612 of the second set of steps, the newly trained decoder model 606B is applied by the processing unit 202 on the input data item 602A to generate a new output data item. The processing unit 202 is further configured to determine a new optimization difference between the expected data item 602B and the new output data item. In a case where the new optimization difference is greater than a threshold difference, then a control flow passes to the first step 602. Furthermore, the processing unit 202 is configured to run the second set of steps for one more iteration. In a case where the new new optimization difference is lesser than the threshold reconstruction loss parameter, then the control flow passes to a seventh step 614 of the second set of steps. At the seventh step 614, a training process of the encoder model (504A, 504B) is completed by the processing unit 202.

Referring back to FIG. 3, the processing unit 202 is configured to receive from the user, a plurality of sets of training data, in which each set of training data is associated with a specific transformation objective of a plurality of tranformation objectives. Examples of the plurality of transformation objectives comprises a first objective to convert a high level language to a machine language, a second objective to translate a sourcecode from a first programming language to a second programming language, a third objective to convert a source code written in a programming language to a description of the source code written in a natural language. The plurality of transformation objectives further comprises a fourth objective of converting a description of a plurality of computer functions into machine language based implementations of the plurality of computer functions.

Thus, a first set of training data, with the first objective, has an input data item associated with a high level language and an expected data item associated with a machine language. Thus, a first transformer autoencoder model 124A, trained with the first set of training data, is configured to convert a first engineering program written in the high level language to a second engineering program written in the machine language. Similarly, a second set of training data set, with the second objective, has an input data item associated with a sourcecode in a first programming language and an expected data item associated with a sourcecode in a second program-ming language. Thus, a second transformer autoencoder model 124B, trained with the second set of training dataset, is configured to convert a sourcecode from a first programming language to a second programming language. The processing unit 202 is further to iteratively execute the first set of steps and the second set of steps on each transformer autoencoder models of the plurality of transformer autoencoder models 124A-N based on the received plurality of sets of training data. Since each transfomer autoencoder model of the plurality of transformer autoencoder models 124A-N is trained with a different set of the plurality of sets of training data, each transformer autoencoder model has a different transformation objective. In one example, each transformer autoencoder model of the plurality of transformer autoencoder models 124A-N has a data label which is indicative of a specific transformation objective of the transformer autoencoder model. In one example, the specific transformation objective of a transformer autoencoder model comprises information associated with an input specification and an output specification of the transformer autoencoder model. In such a case, the transformer autoencoder model is configured to process an engineering program with the input specification to generate an engineering program with the output specification.

Advantageously, each transformer autoencoder model of the plurality of transformer autoencoder model 124A-N is configured to perform a specific type of transformation of an engineering program. Furthermore, a user is enabled to train new transformer autoencoder models with new specific transformation objectives by providing an appropriate set of training data to the processing unit 202. The user is further enabled to select an appropriate transformer autoencoder models from the plurality of transformer autoencoder models to perform a transformation of an engineering program from one form to another.

The automation module 112 further causes the processing unit 202 to generate a relational graph neural network to generate a plurality of node embeddings for one or more name graphs. The plurality of node embeddings is indicative of a vector space in which two or more nodes of the one or more name graphs are arranged in a specific arrangement. In the specific arrangement, the two or more nodes are arranged such that a distance between the two or more nodes is inversely proportional to a degree of similarity between the two or more nodes.

The relational graphical neural network is at least one of a Graph Convolutional Network (GCNs), a GraphSAGE network a Graph Attention Network (GAT) or a GraphSAGE++ network. The processing unit 202 is configured to train the relational graphical neural network based on a training dataset comprising a training name graph. The processing unit 202 is configured to train the relational graph neural network by iteratively training the relational graph neural network based on a plurality of nodes of the training name graph. The relational graph neural network is trained to generate each node embedding of the plurality of node embeddings. In one example, the training name graph is received from the user via an input device. Furthermore, a plurality of ground truth labels associated with the training name graph is also received from the user.

In one example, the training name graph has a graph data structure or data loader. The processing unit 202 is configured to load the training name graph into the relational graph neural network. Each node of the plurality of nodes of the training name graph has a feature vector and one or more edge connections. The processing unit 202 is further configured to define the relational graph neural network based on a deep learning framework. Examples of the deep learning framework includes but is not limited to PyTorch or TensorFlow. The processing unit 202 further is configured to define the relational graph neural network based on one or more user inputs received via an input device such as the one or more client devices 120A-N. In one example, the processing unit 202 is configured to define a plurality of structural aspects associated with the relational graph neural network based on the one or more user inputs. The plurality of structural aspects include but is not limited to a plurality of convolutional layers, a plurality of activation functions, and initial values of a plurality of parameters associated with the relational graph neural network. Furthermore, the processing unit 202 is further configured to select a loss function for the relational graph neural network based on the one or more user inputs. Examples of the loss function include a mean squared error function and a categorical cross-entropy function.

It is noted that the processing unit 202 is configured to receive the plurality of ground truth labels which corresponds to the training name graph. The plurality of ground truth labels are indicative of one or more node embeddings in which the plurality of nodes of the training name graph are arranged such that a distance between two or more nodes of the one or more node embeddings is inversely proportional to a degree of similarity between the two or more nodes. Each node of the plurality of nodes of the training name graph corresponds to at least one label of the plurality of ground truth labels. The processing unit 202 is further configured to iterate over the plurality of nodes of the training name graph and the plurality of ground truth labels. In one example, the iteration is performed over the training name graph in a plurality of batches. Each batch of the plurality of batches corresponds to a specific set of ground truth labels of the plurality of ground truth labels. The processing unit 202 is further configured to pass each batch of the plurality of batches through the relational graph neural network to generate a plurality of predicted data items. The processing unit 202 is further configured to determine an optimization loss associated with each batch of the plurality of batches by computing difference between the plurality predicted data items and the specific set of ground truth labels which correspond to the batch. The processing unit 202 is further configured to iteratively optimize the relational graph neural network by application of a parameters optimization algorithm on the relational graph neural network and the determined optimization loss. The processing unit 202 is thus configured to train the relational graph neural network to generate a set of node embeddings for the training name graph such that a distance between a set of nodes in the set of node embeddings is inversely proportional to a degree of similarity between the set of nodes.

The automation module is further configured to cause the processing unit 202 to receive a user request to generate the specific engineering program from information associated with at least one engineering program. The user request is received from user via an input device. In one example, the processing unit 202 is configured to receive the at least one engineering program from the user.

In one example, the user request is a request to generate the specific engineering program in accordance with a first set of syntactic and semantic rules associated with a first specification. Furthermore, the user request comprises information associated with a second specification of the at least one engineering program. The second specification is indicative of a second set of syntactic and semantic rules based on which the at least one engineering program has been coded by a human coder.

In another example, the automation module 112 causes the processing unit 202 to receive the plurality of compatibility parameters associated with the computing platform 110. In other words, the specific engineering program is compatible with the computing platform 110 if the first specification, of the specific engineering program, matches with the plurality of compatibility parameters. the automation module 112 causes the processing unit 202 to analyze the second specification associated with the at least one engineering program, and the plurality of compatibility parameters associated with the computing platform. In one example, to analyse the second specification, the processing unit 202 is configured to compare the second set of syntactic and semantic rules with the received plurality of compatibility parameters. In a case where the second set of syntactic and semantic rules fails to match with the received plurality of compatibility parameters, the processing unit (202) determines that the at least one engineering program is incompatible with the computing platform 110.

In a case where where the second set of syntactic and semantic rules matches with the received plurality of compatibility parameters, the processing unit 202 determines that the at least one engineering program is compatible with the computing platform 110. In a case where the at least one engineering program is determined to be incompatible with the computing platform, the processing unit 202 is configured to generate a user notification that the at least one engineering program is incompatible. The processing unit 202 is further configured to receive a second specification from the user such that the second specification matches with the plurality of compatibility requirements of the computing platform 110.

The first specification is different from the second specification. The first specification is indicated in the user request. In one example, the user request comprises information associated with a specific transformation objective to convert the at least one engineering program into the specific engineering program.

In one example, the at least one engineering program comprises a code based implementation of a plurality of computer functions. Example of the plurality of computer functions include but is not limited to a mathematical function, an engineering function, and an industrial control function. In such a case, the second specification comprises a set of syntactic and semantic rules for coding the code based implementation. Further, the specific engineering program is a natural language based description of the plurality of computer functions. In such a case, the first specification comprises a plurality of grammatical rules associated with the natural language based description of the plurality of computer functions. In one example, the at least one engineering program is selected by a user from a plurality of engineering programs. The user is enabled to select the at least one engineering program from the plurality of engineering programs via a user input device such as the one or more client devices 120A-N.

The automation module 112 further causes the processing unit 202 to analyze the at least one engineering program based on an application of a machine learning algorithm on the at least one engineering program. In one example, the machine learning algorithm is a natural language processing algorithm. In a case where the at least one engineering program comprises words, code snippets and machine language, the natural language processing algorithm is configured to detect the words, code snippets and machine language in the at least one engineering program. In one example, the natural language processing algorithm is at least one of a named entity recognition algorithm, a text summarization algorithm, and a tokenization algorithm. In another example, the machine learning algorithm is a graphical pattern recognition algorithm. In a case where the at least one engineering program is a graphical program such as ladder based engineering program, then the graphical pattern recognition algorithm is configured to determine one or more graphical objects in the at least one engineering program.

The automation module 112 further causes the processing unit 202 to determine program data from the at least one engineering program based on the analysis. The program comprises information associated with the at least one engineering program such as words, code snippets, variables, functions, conditional statements, programming blocks, classes, nodes, and graphical objects.

The automation module 112 further causes the processing unit 202 to generate a plurality of tokens from the the determined program data. In other words, the automation module 112 is configured to generate the plurality of tokens from at least one engineering program by application of a tokenization algorithm on the at least one engineering program. Each token of the plurality of tokens comprises at least one constituent data item of the at least one engineering program. Thus each token of the plurality of tokens is at least one of a word, a code snippet, a variable, a function, a conditional statement, a programming block, a class, a node, and a graphical object.

The automation module 112 further causes the processing unit 202 to apply a dependency parsing algorithm on the plurality of tokens to analyze a syntactic structure of interdependencies between one or more tokens of the plurality of tokens. Furthermore, the dependency parsing algorithm is applied on the at least one engineering program. The dependency parsing algorithm is configured to identify a plurality of interdependencies between two or more tokens of the plurality of tokens based on the application of the dependency parsing algorithm on the at least one engineering program. Examples of the dependency parsing algorithm includes but is not limited to a transition based parsing algorithm, a graph based parsing algorithm, and a neural dependency based parsing algorithm. The plurality of interdependencies comprise a plurality of grammatical, syntactic, and semantic relationships between two or more tokens of the plurality of tokens. It is noted that each token of the plurality of tokens is indicative of a constituent data item of the at least one engineering program. In one example, the processing unit is configured to filter the plurality of tokens with one or more named entity recognition (NER) algorithms to identify mentions of each of a plurality of code snippets in the at least one engineering program. Examples of the named entity recognition algorithm includes a dictionary based NER algorithm, a conditional random field based NER algorithm, and hidden markov model NER.

The automation module 112 further causes the processing unit 202 to analyze the identified mentions of the plurality of tokens. The processing unit 202 is further configured to assign a plurality of semantic roles to the identified mentions of the plurality of tokens. The plurality of semantic roles are assigned by application of a semantic role labelling algorithm on the identified mentioned of the plurality of tokens. The semantic roles of each component of the plurality of tokens is indicative of a relationship of each token with other tokens of the plurality of tokens. Examples of the semantic role labelling algorithms include, but is not limited to AllenNLP Algorithm or PropBank project algorithm.

The processing unit 202 is configured to generate a plurality of dependency trees based on the determined plurality of interdependencies between two or more tokens of the plurality of tokens. Each dependency tree of the plurality of dependency trees is indicative of a plurality of interdependencies between a specific token of the plurality of tokens and the at least one engineering program.

The automation module 112 further causes the processing unit 202 to generate a name graph based on the plurality of dependency trees. In one example, the processing unit 202 is configured to concatenate the plurality of dependency trees to generate the name graph based on a set of rules. The set of rules is received by the processing unit 202, from the user via an input device. In another example, the processing unit 202 is configured to combine the plurality of dependency trees by application of a mathematical operation such as a union operation or an intersection operation on the plurality of dependency trees. The processing unit 202 is configured to merge the plurality of dependency trees based on an analysis of the assigned plurality of semantic roles.

The name graph comprises a plurality of nodes. Each node of the plurality of nodes comprises information associated with a specific token of the plurality of tokens of the at least one engineering program. Thus, the name graph comprises information associated with the plurality of interdependencies between the plurality of tokens extracted from the at least one engineering program. Thus, the generated name graph comprises information associated with a structure of the at least one engineering program.

Furthermore, it is noted that the plurality of tokens indicate a plurality of constituent data items of the at least one engineering program, such as words, code snippets, variables, functions, conditional statements, programming blocks, classes, nodes, and graphical objects within the at least one engineering program. A plurality of interdependencies between the plurality of constituent data items of the at least one engineering program is indicative of a plurality of data flow and a plurality of control flow within the at least one engineering program. Thus, the plurality of interdependencies between the plurality of tokens indicate a plurality of data flow and a plurality of control flow within the at least one engineering program. In other words, the name graph comprises information associated with the plurality of data flow and the plurality of control flow within the at least one engineering program.

The automation module 112 further causes the processing unit 202 to apply the trained relational graph neural network on the name graph to generate a set of node embeddings. The set of node embeddings is indicative of a vector space in which the two or more nodes of the plurality of nodes of the name graph are arranged in a specific arrangement. In the specific arrangement, a distance between two or more nodes of the plurality of nodes is inversely proportional to a degree of similarity between the two or more nodes. In other words, in the set of node embeddings, each node embedding comprises information associated with a specific node of the plurality of nodes, as well as information associated with neighbouring nodes of the specific node.

It is noted that each node comprises information associated with at least one token of the plurality of tokens of the at least one engineering program. Advantageously, the processing unit 202 is configured to capture not only information associated with each node of the plurality of nodes of the name graph, but also information associated with relationship of each node with with other nodes of the plurality of nodes. It is further noted that the plurality of nodes comprises information associated with interdependencies between words, code segments, code snippets, variables, functions, and other constituent elements of the at least one engineering program. Thus the plurality of node embeddings capture interelationships between each constituent data item of the plurality of constituent data items of the at least one engineering program, to other constituent data items of the at least one engineering program.

The automation module 112 further causes the processing unit 202 to generate a knowledge graph based on the generated set of node embeddings. In other words, the knowledge graph is generated based on the information associated with the at least one engineering program.

The automation module 112 further causes the processing unit 202 to apply a flattening algorithm on the generated knowledge graph. Examples of the flattening algorithms include but is not limited to a tree traversal algorithm, a graph partitioning algorithm, a semantic flattening algorithm, a dimensionality reduction algorithm, and a graph compression algorithm. The flattening algorithm is configured to generate a flattened knowledgre graph based on the application of the flattening algorithm on the knowledge graph. The flattened knowledge graph is a simplified and condensed representation of the knowledge graph. The flattened knowledge graph has information associated with the plurality of node embeddings of the plurality of nodes of the name graph. Thus, the flattened knowledge graph not only comprises information associated with each node of the plurality of nodes, but also information associated with interelationships between each node to every other node in the plurality of nodes of the name graph. Thus in other words, the flattened knowledge graph comprises contextual information associated with a plurality of constituent data items of the at least one engineering program.

The automation module 112 further causes the processing unit 202 to compare a specific transformation objective associated with the user request to a data label of each transformer autoencoder model in the plurality of transformer autoencoder models 124A-N. It is noted that a data label of each transformer autoencoder model of the plurality of transformer autoencoder models 124A-N comprises information associated with a specific transformation objective of the transformer autoencoder model.

The automation module 112 further causes the processing unit 202 to select a transformer autoencoder model 124A from the plurality of transformer autoencoder models 124A-N based on the comparison. In one example, the selected transformer autoencoder model has a specific transformation objective which matches with the specific transformation objective associated with the user request. In other words, the selected transformer autoencoder model 124A is trained such that the selected transformer autoencoder model 124A to convert the knowledge graph into the specific engineering program.

The automation module 112 further causes the processing unit 202 to apply the selected transformer autoencoder model 124A on the flattened knowledge graph to generate the specific engineering program. In other words, the processing unit 202 is configured to apply the selected transformer autoencoder model 124A on the knowledge graph.

The automation module 112 further causes the processing unit 202 to generate the specific engineering program from the at least one engineering program based on the application of the selected transformer autoencoder model 124A on the knowledge graph of the at least one engineering program. Advantageously, the transformer autoencoder model 124A is applied on the knowledge graph that comprises information associated with the plurality of interdependencies between the plurality of constituent data items of the at least one engineering program. Thus, the specific engineering program is generated based on knowledge on the at least one engineering program as well as information on the plurality of interdependencies between the plurality of constituent data items of the at least one engineering program. Furthermore, the specific engineering program is generated based on the set of node embeddings in which each node of the plurality of nodes comprises information associated with neighbouring nodes of the node. Thus, interelationships between the plurality of constituent data items of the at least one engineering program are faithfully captured and transformed in the generated specific engineering program. Advantageously, a huge amount of labour and time which otherwise would have been spent in understanding the plurality of interdependencies, between the plurality of constituent data items of the at least engineering program, is thus eliminated.

The automation module 112 further causes the computing platform 110 to execute the generated specific engineering program on the computing platform 110. Advantageously, the specific engineering program is compatible with the computing platform 110. Further advantageously, a human coder is spared from a labour of manually recoding the at least one engineering program to generate the specific engineering program. Thus, a plurality of tasks such as upgradation and migration of the computing platform is simplified.

In one example, the at least one engineering program is coded in accordance with a first coding policy. The user request comprises a specific transformation objective to generate the specific engineering program based on a second coding policy. The first coding policy and the second coding policy comprises one or more syntactic rules for coding the specific engineering program and the at least one engineering program. The processing unit 202 is configured to select the transformer autoencoder model which is configured to convert a first engineering program coded with the first coding policy to a second engineering program coded with the second coding policy. The processing unit 202 is further configured to apply the at least one transformer autoencoder model on a knowledge graph associated with the at least one engineering program to generated the specific engineering program.

In another example, the at least one engineering program comprises a natural language based description of a plurality of functions. The user request comprises a specific transformation objective to generate the specific engineering program which comprises a machine language based implementation of the plurality of functions. The processing unit 202 is configured to receive a training data set configured to train at least one transformer autoencoder model to convert a first engineering program which comprises a natural language description of at least one function to a second engineering program comprising a machine learning based representation of the at least one function. The processing unit 202 is further configured to apply the at least one transformer autoencoder model on a knowledge graph associated with the at least one engineering program to generate the specific engineering program which comprises the machine language based implementation of the plurality of functions.

In yet another example, the at least one engineering program comprises a machine language based implementation of a plurality of functions. The user request comprises a specific transformation objective to generate the specific engineering program which comprises a natural language based description of the plurality of functions. The processing unit 202 is configured to receive a training data set configured to train at least one transformer autoencoder model to generate a first engineering program which comprises a natural language description of at least one function from a second engineering program comprising a machine learning based representation of the at least one function. The processing unit 202 is further configured to apply the at least one transformer autoencoder model on a knowledge graph associated with the at least one engineering program to generate the specific engineering program which comprises the natural language based description of the at least one function.

In yet another example, the at least one engineering program is a graphical program comprising a plurality of programming blocks. The user request comprises a specific transformation objective to generate the specific engineering program which comprises a machine language based representation of the graphical program. The processing unit 202 is configured to receive a training data set configured to train at least one transformer autoencoder model to generate a first engineering program which comprises a machine language representation of at least one programming block. The at least one transformer autoencoder model is trained to generate the first engineering program from a second engineering program which is a graphical program comprising the at least one programming block. The processing unit 202 is further configured to apply the at least one transformer autoencoder model on a knowledge graph associated with the at least one engineering program to generate the specific engineering program which comprises a machine language based representation of the graphical program.

In yet another example, the at least one engineering program is a machine learning based representation of a plurality of computer functions. The user request comprises a specific transformation objective to generate the user specified engineering program which comprises an algorithmic flowchart indicative of the plurality of computer functions. The processing unit 202 is configured to receive a training data set configured to train at least one transformer autoencoder model to generate a first engineering program which comprises a machine language representation of at least one programming block. The at least one transformer autoencoder model is trained to generate the first engineering program from a second engineering program which is a machine learning based representation of at least one computer function. The processing unit 202 is further configured to apply the at least one transformer autoencoder model on a knowledge graph associated with the at least one engineering program to generate the user specified engineering program which comprises the algorithmic flowchart indicative of the plurality of computer functions.

The storage unit 206 may be a non-transitory storage medium configured for storing a database (such as database 118) which comprises server version of the one or more automation domain object 108A-N associated with the industrial automation project 106.

The communication interface 208 is configured for establishing communication sessions between the one or more client devices 120A-N and the engineering system 102. The communication interface 208 allows the one or more engineering applications running on the client devices 120A-N to import/export industrial automation project files into the engineering system 102. In an embodiment, the communication interface 208 interacts with the interface at the one or more client devices 120A-N for allowing the engineers to access the engineering programs associated with an industrial automation project file and perform one or more actions on the engineering programs stored in the engineering system 102.

The input-output unit 210 may include input devices a keypad, touch-sensitive display, camera (such as a camera receiving gesture-based inputs), etc. capable of receiving one or more input signals, such as user commands to process industrial automation project file. Also, the input-output unit 210 may be a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processing unit 202, the memory 204, and the input-output unit 210.

The network interface 212 may be configured to handle network connectivity, bandwidth and network traffic between the engineering system 102, client devices 120A-N and the industrial automation project 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

FIG 3 is a block diagram of an automation module 112, such as those shown in FIG 2, in which an embodiment of the present invention can be implemented. In FIG 3, the automation module 112 comprises a request handler module 302, a knowledge graph generation module 304, an analysis module 306, a modifier module 308, a transformer autoencoder model database 310, a validation module 312 and a deployment module 314. FIG. 3 is explained in conjunction with FIG. 1 and FIG. 2.

The request handler module 302 is configured for receiving the user request to generate the specific engineering program from the at least one engineering program. For example, the user request is received from one of the one or more users external to the industrial environment 100 via a network. In alternative embodiment, the user request is received from the one or the one or more client devices 120A-N via the network.

The knowledge graph generation module 304 is configured for analyzing one or more engineering programs to generate one or more name graphs for the one or more engineering programs. The one or more name graphs comprises a plurality of nodes which is indicative of a plurality of interdependencies between a plurality of constituent data items of the one or more engineering programs.

The analysis module 306 is configured for analyzing the one or more name graphs associated with the one or more engineering programs. Specifically, the analysis module 306 is configured for determining a plurality of control flow and data flow within the one or more engineering programs. Further, the analysis module 306 is configured for generating a plurality of node embeddings associated with the one or more name graphs by application of a relational graph neural network on the one or more nodes. The analysis module 306 is further configured to generate a knowledge graph based on the plurality of node embeddings.

The modifier module 308 is configured for applying at least one transformer autoencoder model on the knowledge graph of the one or more engineering program. The modifier module is further configured to generate an autoencoder specific engineering program based on the application of the at least transformer autoencoder model on the one or more engineering programs.

The transformer autoencoder model database 310 is configured for storing the plurality of transformer autoencoder models 124A-N. The transformer autoencoder model database 310 is further configured to store information about a specific transformation objective of each transformer autoencoder model of the plurality of transformer autoencoder models 124A-N. The transformer autoencoder model database 310 is further configured to store a plurality of sets of training data used to train the plurality of transformer autoencoder models 124A-N.

The validation module 312 is configured to generate a simulation instance for the industrial environment 100. In one example, the simulation instance is a digital twin of a controller device such as a programmable logic controller in the industrial plant 106. The validation module 312 is further configured to simulate an execution of the specific engineering program in the simulation instance. The validation module 312 is further configured to generate a plurality of key performance indicators associated with a simulated execution of the generated specific engineering program. The plurality of key performance indicators include but is not limited to a processing speed, a memory resource requirement and code length of the generated specific engineering program. The validation module 312 is further configured to validate the generated specific engineering program based on the determined plurality of key performance indicators.

The deployment module 314 is configured for deploying the generated specific engineering program in real-time onto the industrial environment 100 based on the validation. Advantageously, the generated specific engineering program is only deployed after the determination that the generated specific engineering program is valid.

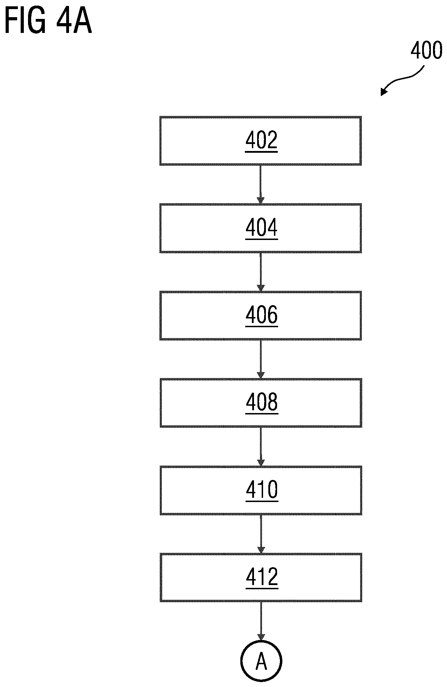

FIG 4A-C is a process flowchart illustrating an exemplary method 400 of generating an engineering program which is compatible with a computing platform 110, according to an embodiment of the present invention. FIG. 4A-C is explained in conjunction with FIG. 1, 2, and 3.

At step 402, the automation module 112 causes the processing unit 202 to train the plurality of transformer autoencoder models 124A-N. The processing unit 202 is configured to receive from the user, a plurality of set of training data, in which each set of training data is associated with a specific transformation objective of a plurality of tranformation objectives. The plurality of transformer autoencoder models 124A-N are trained based on the plurality of set of training data.

At step 404, the automation module 112 causes the processing unit 202 to generate the relational graph neural network to generate a plurality of node embeddings for one or more name graphs. The plurality of node embeddings is indicative of a vector space in which two or more nodes of the one or more name graphs are arranged in a specific arrangement. In the specific arrangement, the two or more nodes are arranged such that a distance between the two or more nodes is inversely proportional to a degree of similarity between the two or more nodes.

At step 406, the automation module 112 is further configured to cause the processing unit 202 to receive a user request to generate the specific engineering program from information associated with at least one engineering program. The user request is received from user via an input device. The specific engineering program has a first specification and the at least one engineering program has a second specification.

At step 408, the automation module 112 further causes the processing unit 202 to analyze the at least one engineering program based on an application of a machine learning algorithm on the at least one engineering program. In one example, the machine learning algorithm is a natural language processing algorithm.

At step 410, the automation module 112 further causes the processing unit 202 to determine program data from the at least one engineering program based on the analysis. The program comprises information associated with the at least one engineering program such as words, code snippets, variables, functions, conditional statements, programming blocks, classes, nodes, and graphical objects.

At step 412, the automation module 112 further causes the processing unit 202 to generate a plurality of tokens from the at least one engineering program by application of a tokenization algorithm. Each token of the plurality of tokens comprises at least one constituent data item of the at least one engineering program. Thus each token of the plurality of tokens is at least one of word, a code snippet, a variable, a function, a conditional statement, a programming block, a class, a node, and a graphical object.

At step 414, the automation module 112 further causes the processing unit 202 to apply a dependency parsing algorithm on the plurality of tokens to analyze a syntactic structure of interdependencies between one or more tokens of the plurality of tokens.

At step 416, the automation module 112 further causes the processing unit 202 to analyze the identified mentions of the plurality of tokens. The processing unit 202 is further configured to assign a plurality of semantic roles to the identified mentions of the plurality of tokens. The processing unit 202 is further configured to generate a pluraloity of dependency trees based on the identified mentions of the plurality of tokens and the analyzed syntactic structure of interdependencies between the one or more tokens of the plurality of tokens.

At step 418, the automation module 112 further causes the processing unit 202 to generate a name graph based on the plurality of dependency trees. In one example, the processing unit 202 is configured to concatenate the plurality of dependency trees to generate the name graph based on a set of rules.

At step 420, the automation module 112 further causes the processing unit 202 to apply the trained relational graph neural network on the name graph to generate a set of node embeddings. The set of node embeddings is indicative of a vector space in which the two or more nodes of the plurality of nodes of the name graph are arranged in a specific arrangement.

At step 422, the automation module 112 further causes the processing unit 202 to generate a knowledge graph based on the generated set of node embeddings. In other words, the knowledge graph is generated based on the information associated with the at least one engineering program.

At step 424, the automation module 112 further causes the processing unit 202 to apply a flattening algorithm on the generated knowledge graph. Examples of the flattening algorithms include but is not limited to a tree traversal algorithm, a graph partitioning algorithm, a semantic flattening algorithm, a dimensionality reduction algorithm, and a graph compression algorithm.

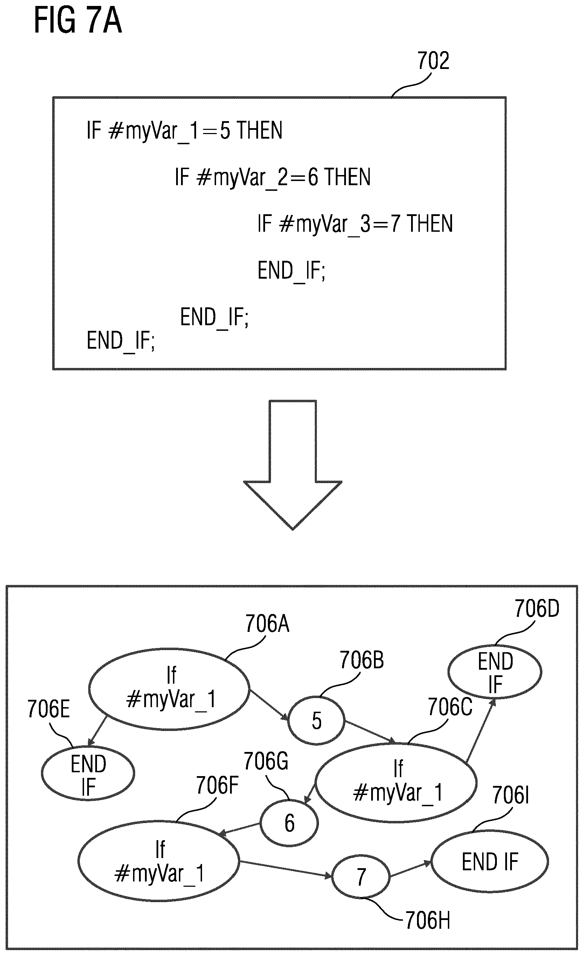

Referring to FIG. 7A, FIG. 7A is an exemplary illustration of generation of a name graph 704 from a first engineering program 702. The first engineering program 702 is drafted in accordance with a first set of syntax rules. In the exemplary illustration of FIG. 7A-C, the first set of syntax rules dictates that each code statement of the first engineering program 702 is in coded in a different line. Furthemore, in the exemplary illustration of FIG. 7A-C, the automation module 112 is configured to generate a second engineering program 712 based on information of the first engineering program 702. The second engineering program 712 is generated by the automation module 112 such that the second engineering program 712 has a second specification comprising a second set of syntax rules. In accordance with the second set of syntax rules, a plurality of code statements of the first engineering program 702 is coded in a single line in the second engineering program 712.

The processing unit 202 is configured to apply a tokenization algorithm, a dependency parsing algorithm, and a semantic role detection algorithm on the first engineering program 702 to generate the name graph 704. The name graph 704 comprises a plurality of nodes 706A-I. In the exemplary illustration of FIG. 7A, a first set of nodes 706A, 706C, and 706F are similar to each other. Furthermore, a second set of nodes 706B, 706G, and 706H are similar to each other. Furthermore, a third set of nodes 706D, 706E, and 7061 are similar to each other. However, in the name graph 704, each node of the first set of nodes 706A, 706C, and 706F are spatially distant from each other.

The processing unit 202 is further configured to apply the trained relational graph neural network (R-GNN) on the name graph 704 to generate a plurality of node embeddings. In one example, a numerical value of each node embedding of the plurality of node embeddings is generated in an iterative manner by the trained relational graph neural network in accordance with Formula (1).

$$h_i^{L+1} = f(h_i^L w^L + \sum_{r_k \in R} \sum_{j \in N_i^{r_k}} \frac{1}{C_{i,r_k}} w_{r_k}^L h_j^L) \quad \dots\dots\dots\dots (1)$$

wherein:

$L$ is the number of iterations in the R-GNN;

$h_i^{L+1}$ is the updated numerical value of $i^{th}$ node after the $L^{th}$ iteration of the R-GNN;

$f$ is an activation function;

$h_i^L$ is the assigned numerical value of the $i^{th}$ node of the name graph 704 before the $L^{th}$ iteration of the R-GNN;

$w^L$ is a weighted constant;

$r_k$ is the $k^{th}$ relation between the $i^{th}$ node and the $j^{th}$ node;

$R$ is R-GNN constant;

$N_i^{r_k}$ is Neural network constant;

$C_{i,r}$ is a number of the nodes to which the $i^{th}$ node is related;

$w_r^L$ is the predefined weight of the determined type of relation between the $i^{th}$ node and the $j^{th}$ node before the $L^{th}$ iteration of the R-GNN; and

$h_j^L$ is the assigned numerical value of the $j^{th}$ node before the $L^{th}$ iteration of the R-GNN.

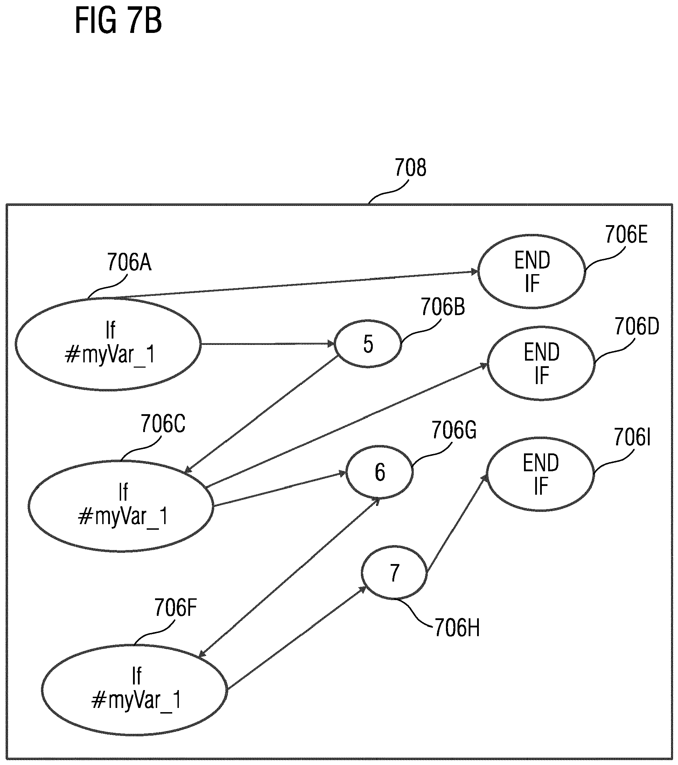

Referring to FIG. 7B, FIG. 7B illustrates a knowledge graph 708 generated by the relational graph neural network from the name graph 704. In the knowledge graph 708, each node of the first set of nodes 706A, 706C, and 706F are closer to each other in comparison to a spatial location of the first set of nodes 706A, 706C, and 706F in name graph 704. Similarly, each node of the second set of nodes 706B, 706G, and 706H are closer to each other in comparison to positions of the second set of nodes 706B, 706G, and 706H in the name graph 704. Thus, a position of each node in the knowledge graph 708 is indicative of information associated with neighbouring nodes within a threshold distance of the node. It is noted that nodes in the first set of nodes 706A, 706C, and 706F are similar to each other. Since the first set of nodes 706A, 706C, and 706F are similar to each other, the the first set of nodes 706A, 706C, and 706F are close together in the knowledge graph 708. In other words, in the knowledge graph 708, a distance between two or more nodes of a plurality of nodes of the knowledge graph 708, is inversely proportional to a similarity between the two or more nodes.

The processing unit 202 is further configured to apply a flattening algorithm on the knowledge graph 708 to generate a flattened knowledge graph.

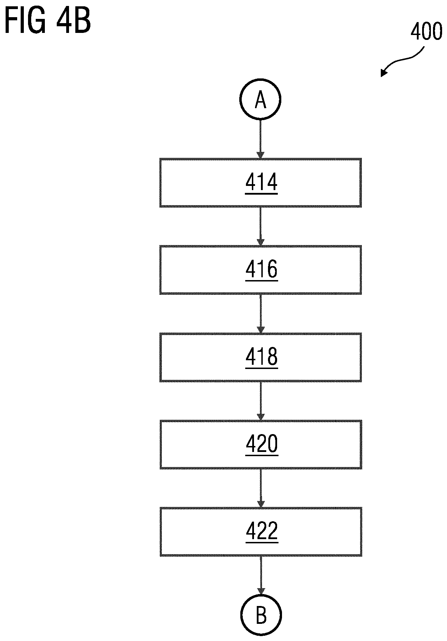

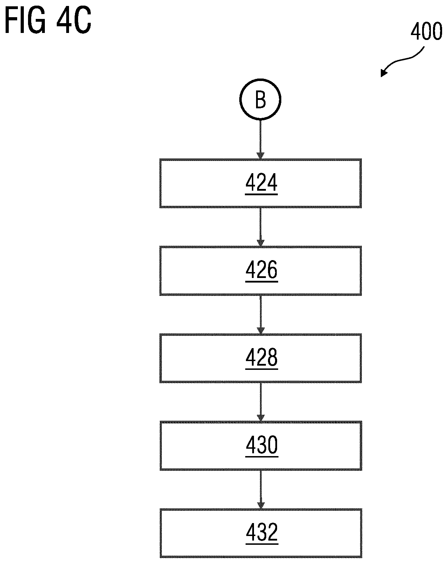

Referring back to FIG. 4, at step 426, the automation module 112 further causes the processing unit 202 to compare a specific transformation objective associated with the user request to a plurality of data labels in the plurality of transformer autoencoder models.

At step 428, the automation module 112 further causes the processing unit 202 to select a transformer autoencoder model 124A from the plurality of transformer autoencoder models 124A-N based on the comparison. In one example, the selected transformer autoencoder model has a specific transformation objective which matches with the specific transformation objective associated with the user request.

At step 430, the automation module 112 further causes the processing unit 202 to apply the selected transformer autoencoder model 124A on the flattened knowledge graph to generate the specific engineering program. In other words, the processing unit 202 is configured to apply the selected transformer autoencoder model 124A on the knowledge graph.

At step 432, the automation module 112 further causes the processing unit 202 to generate the specific engineering program from the at least one engineering program based on the application of the selected transformer autoencoder model 124A on the knowledge graph of the at least one engineering program.

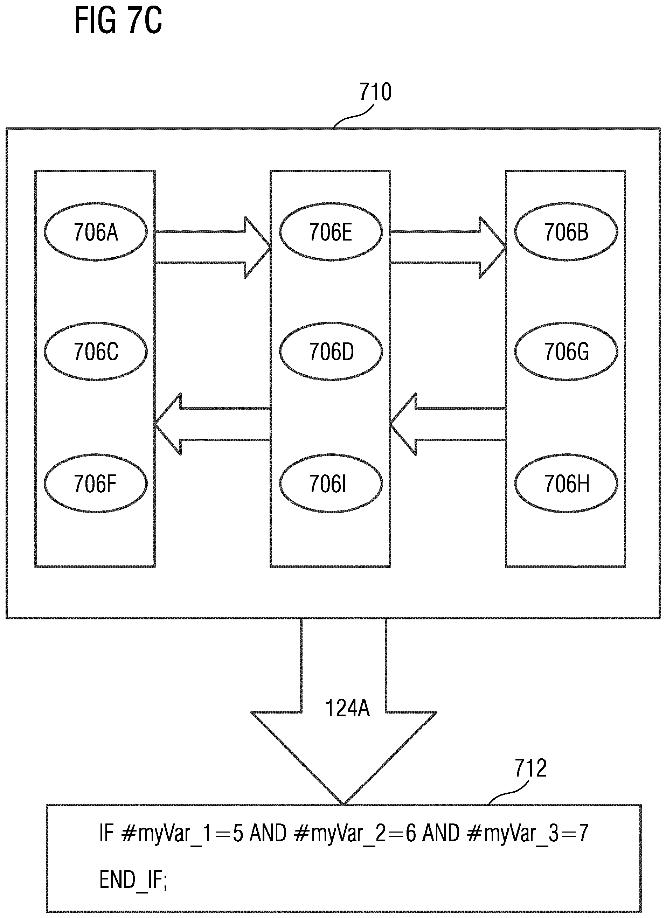

With reference of FIG. 7C, FIG 7C. Illustrates a flattened knowledge graph 710. In the flattened knowledge graph 710, one or more interrelationships and one or more similarities between the plurality of nodes of the name graph 704 are represented in a condensed format. The processing unit 202 is further configured to apply the transformer autoencoder model 124A on the flattened knowledge graph 710 to generate the second engineering program 712.

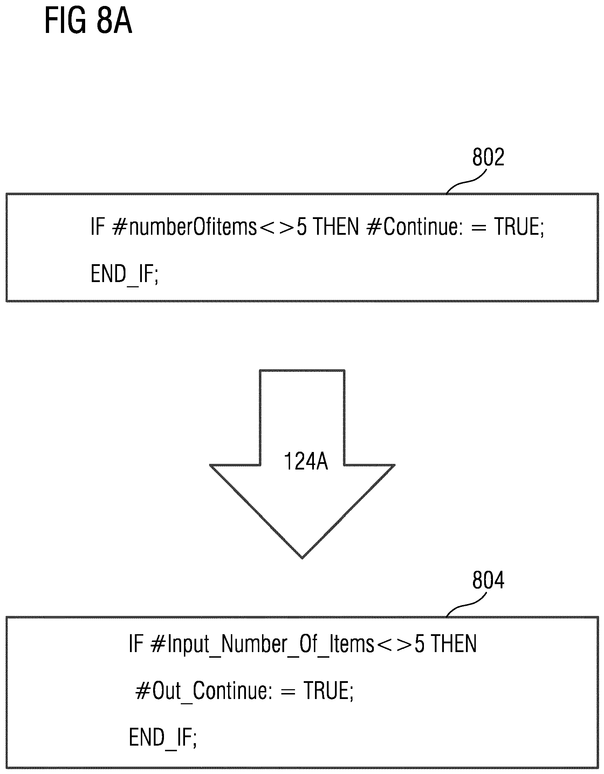

FIG 8A-C is an exemplary illustration of a plurality of use cases of an automation module 112 according to an embodiment of the present invention. FIG 8A-C is explained in conjunction with FIG. 1-7.

With reference to FIG. 8A, FIG. 8A illustrates conversion of at least one engineering program 802 to a specific engineering program 804 by use of a transformer autoencoder model 124A. The at least one engineering program 802 is coded in accordance with a first coding policy. The user request comprises a specific transformation objective to generate the specific engineering program based on a second coding policy. The first coding policy and the second coding policy comprises one or more syntactic rules for coding the specific engineering program and the at least one engineering program. For example, in accordance with the first coding policy, in the at least one engineering program 802, a first parameter is named as "numberofitems". In accordance with the second coding policy, in the specific engineering program 804, the first parameter is named as "Input_number_of_items". The processing unit is configured to select the transformer autoencoder model 124A which is configured to convert a first engineering program coded with the first coding policy to a second engineering program coded with the second coding policy. The processing unit 202 is further configured to apply the at least one transformer autoencoder model 124A on a knowledge graph associated with the at least one engineering program 802 to generate the specific engineering program 804.

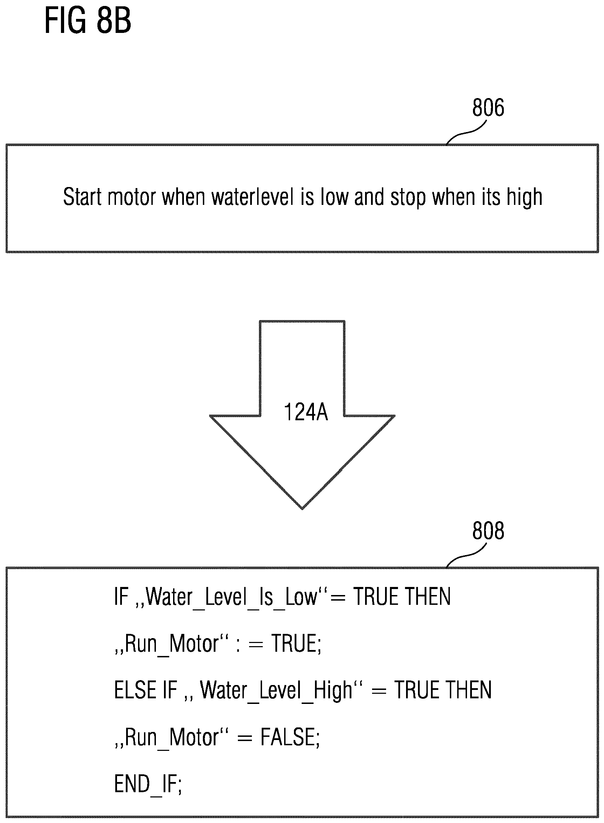

With reference to FIG. 8B, FIG. 8B illustrates conversion of at least one engineering program 806 which comprises a natural language based description of at least one function. In the at least one engineering program 806, the at least one function is to start a motor when water level is low and stop when the water level is high. A user request, received by the processing unit 202, comprises a specific transformation objective to generate a specific engineering program 808 which comprises a programming language based implementation of the at least one function. The processing unit 202 is configured to receive a training data set configured to train at least one transformer autoencoder model 124A to convert a first engineering program which comprises a natural language description of at least one function to a second engineering program comprising a machine learning based representation of the at least one function. The processing unit 202 is further configured to apply the at least one transformer autoencoder model 124A on a knowledge graph associated with the at least one engineering program 806 to generate the specific engineering program 808 which comprises the programming language based implementation of the at least one function.

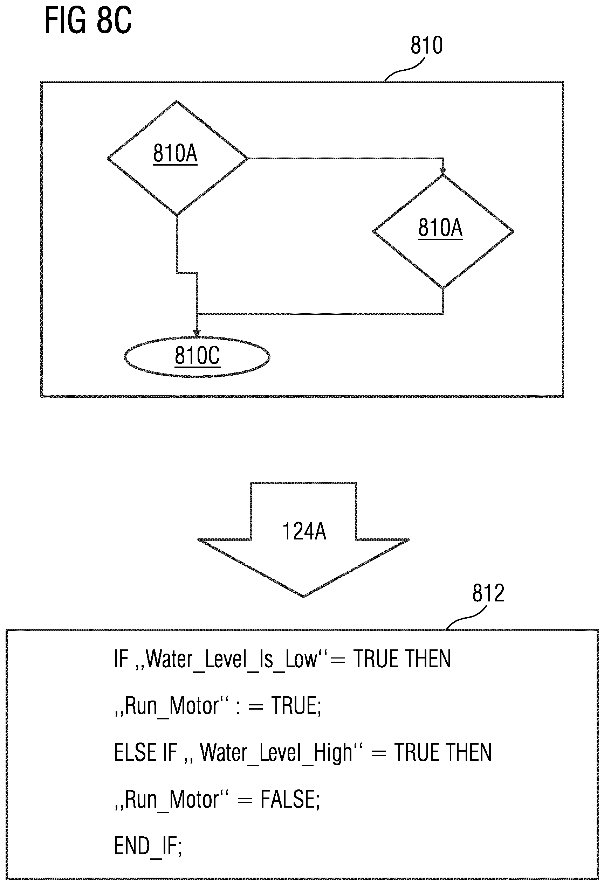

With reference to FIG. 8C, FIG. 8C illustrates conversion of at least one engineering program 810 which is a graphical program comprising a plurality of programming blocks 810A-C. The user request comprises a specific transformation objective to generate a specific engineering program 812 which comprises a programming language based representation of the graphical program. The processing unit 202 is configured to receive a training data set configured to train at least one transformer autoencoder model 124A to generate a first engineering program which comprises a machine language representation of at least one programming block. The at least one transformer autoencoder model is trained to generate the first engineering program from a second engineering program which is a graphical program comprising the at least one programming block. The processing unit 202 is further configured to apply the at least one transformer autoencoder model 124A on a knowledge graph associated with the at least one engineering program 810 to generate the specific engineering program 812 which comprises a machine language based representation of the graphical program.

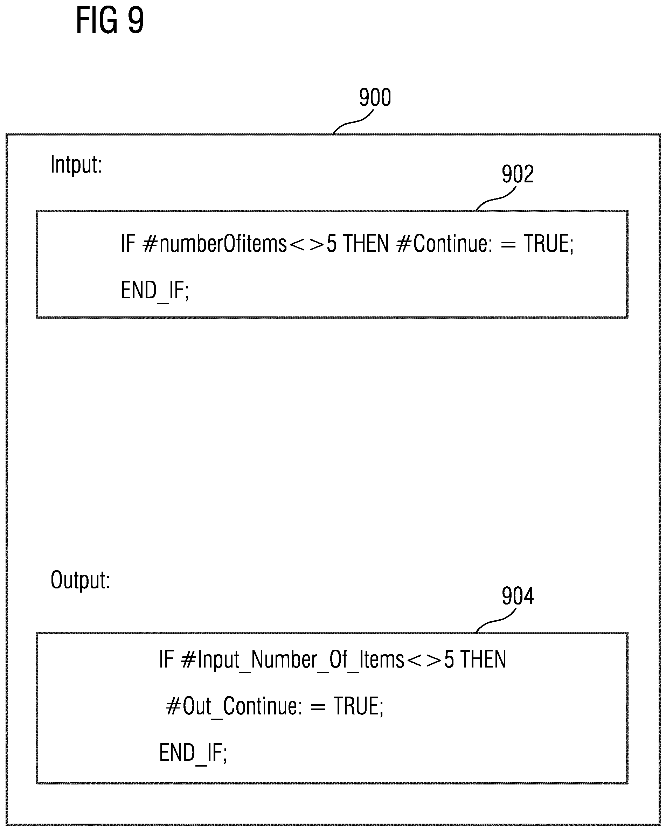

FIG. 9 is an exemplary illustration of a user interface 900 for displaying an input and an output of an automation module according to an embodiment of the present invention. The user interface displays at least one engineering program 902 and a specific engineering program 904 generated by the automation module 112.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

Reference list

1. an industrial environment 100
2. training data set 106
3. an artificial intelligence model 126
4. the industrial environment 100
5. an engineering system 102
6. one or more client devices 120A-N
7. the network 104
8. The plurality of engineering programs 108A-N
9. a database 118
10. a user interface 122A-N
11. a computing platform 110
12. an automation module 112
13. a server 114
14. a network interface 116
15. an engineering program 124
16. a processing unit 202
17. an accessible memory 204
18. a storage unit 206
19. a communication interface 208
20. an input-output unit 210
21. a network interface 212
22. a bus 214
23. an integrated development environment (IDE) 216
24. a request handler module 302
25. knowledge graph generation module 304
26. an analysis module 306
27. a modifier module 308
28. a transformer autoencoder model database 310
29. a validation module 312
30. a deployment module 314
31. a flattened knowledge graph 710
32. the second engineering program 712
33. the name graph 704
34. first set of nodes 706A, 706C, and 706F
35. the second set of nodes 706B, 706G, and 706H
36. the knowledge graph 708
37. at least one engineering program 802
38. the specific engineering program 804

**Claims**

1. A computer implemented method of generating a specific engineering program which is compatible with a computing platform (110), the method comprising:

    generating, by the processing unit (202), a knowledge graph (708) based on information associated with at least one engineering program,

    wherein the generated knowledge graph (708) is a vector space representation of a plurality of nodes (706A-I), and
    wherein, in the generated knowledge graph (708), a distance between two or more nodes of the plurality of nodes is inversely proportional to a degree of similarity between the two or more nodes of the plurality of nodes (706A-I);

    applying, by the processing unit, a transformer autoencoder model (124A), on the generated knowledge graph (708), wherein the transformer autoencoder model (124A) is configured to generate the specific engineering program (712) which is compatible with a computing platform (110); and
    generating, by the processing unit, the specific engineering program (712) based on the application of the transformer autoencoder model (124A) on the knowledge graph (708).

2. The method according to claim 1, further comprising receiving a user request from a user,

    wherein the user request is indicative of a request to generate the specific engineering program from the information associated with the at least one engineering program,

    wherein the user request comprises information associated with a first specification of the at least one engineering program,
    wherein the specific engineering program has a second specification, and

    wherein each of the first specification and the second specification comprises a specific set of syntactic and semantic rules.

3. The method according to any of claims 1 or 2, further comprising:
    receiving, by the processing unit (202), information associated with the at least one engineering program from a user; and
    executing the generated specific engineering program on the computing platform 110.

4. The method according to any of claims 2, or 3, wherein applying, by the processing unit, the transformer autoencoder model (124A) on the generated knowledge graph comprises:

    analyzing, by the processing unit (202), the first specification associated with the at least one engineering program, and a plurality of compatibility parameters associated with the computing platform 110;
    determining, by the processing unit (202), that the at least one engineering program is incompatible with the computing platform 110 based on the analysis;
    selecting, by the processing unit (202), the transformer autoencoder model (124A) from the plurality of transformer autoencoder models (124A-N) based on the determination that the at least one engineering program is incompatible with the computing platform 110; and
    applying, by the processing unit, the selected transformer autoencoder model (124A) on the generated knowledge graph.

5. The method according to claims 1 and 2, wherein the at least one engineering program with the first specification is incompatible with the computing platform 110 and the specific engineering program with the second specification is compatible with the computing platform 110.

6. The method according to claim 1, wherein the generation of the knowledge graph (708) comprises:

    generating, by the processing unit (202), a plurality of tokens by application of a tokenization algorithm on the information associated with the at least one engineering program (702);

analyzing, by the processing unit, the plurality of tokens and the information associated with the at least one engineering program (702);

determining, by the processing unit (202), a plurality of interdependencies between the plurality of tokens based on the analysis;

generating, by the processing unit (202), a name graph (704) based on the plurality of tokens and the plurality of interdependencies; and

applying, by the processing unit (202), a relational graphical neural network on the generated name graph (704) to generate the knowledge graph (708).

7. The method according to any of claims 2, 3, 4, 5, or 6, wherein applying the transformer autoencoder model (124A) on the generated knowledge graph (704) further comprises:

generating, by the processing unit (202), a flattened knowledge graph (710) by application of a flattening algorithm on the generated knowledge graph (708);

selecting, by the processing unit (202), the transformer autoencoder model (124A) from the plurality of transformer autoencoder models (124A-N) based on the user request; and

applying, by the processing unit (202), the selected transformer autoencoder model (124A) on the flattened knowledge graph (710) to generate the specific engineering program (702).

8. The method according to any of claims 4 or 7, wherein

each transformer autoencoder model of the plurality of transformer autoencoder models (124A-N) comprises an encoder model (504A, 604A) and a decoder model (506A, 606A),

the encoder model (504A, 604A) is a neural network with a first set of neurons and a first set of neural weights, and

the decoder model (506A, 606A) is a neural network with a second set of neurons and a second set of neural weights.

9. The method according to claim 8, wherein the encoder model (504A, 604A) of each transformer autoencoder model of the plurality of plurality of transformer autoencoder models (124A-N) is trained by:

receiving, by the processing unit (202), a plurality of input data items;

applying, by the processing unit (202), the encoder model (504A, 604A) on the plurality of input data items to generate a plurality of encoded data items;

applying, by the processing unit (202), the decoder model (506A, 606A) on the plurality of encoded data items to generate a plurality of reconstructed data items;

comparing, by the processing unit (202), the plurality of reconstructed data items with the plurality of input data items to determine a reconstruction loss;

optimizing, by the processing unit (202), the first set of neural weights of the encoder model (504A, 604A) by application of an optimization algorithm on the first set of neural weights based on the determined reconstruction loss.

10. The method according to claim 9, wherein the decoder model (506A, 606A) of each transformer autoencoder model of the plurality of transformer autoencoder models (124AN) is trained by:

receiving, by the processing unit (202), an input data item and an expected output data item;

applying, by the processing unit (202), the encoder model (504A, 604A) on the input data item to an encoded data item;

applying, by the processing unit (202), the decoder model (506A, 606A,) on the encoded data item to generate a transformed data item;

comparing, by the processing unit (202), the transformed data item with the expected output data item to determine an optimization difference;

optimizing, by the processing unit (202), the second set of neural weights of the decoder model (506A, 606A) by application of an optimization algorithm on the second set of neural weights based on the optimization difference.

11. The method according to any of claims 1 to 10, wherein the information associated with the at least one engineering program (702) comprises a natural language based description of a plurality of functions, and wherein the generated specific engineering program (712) comprises a machine language based implementation of the plurality of functions.

**12.** An engineering system for generation of a specific engineering program which is compatible with a computing platform 110, wherein the engineering system comprises:

one or more processing unit (202); and
a memory (204) coupled to the one or more processor(s), wherein the memory comprises an automation module stored in the form of machine-readable instructions executable by the one or more processor(s), wherein the automation module (112) is capable of performing a method according to any of the claims 1-11.

**13.** An industrial environment (100) comprising:

an engineering system (102) as claimed in claim 12;
a technical installation (106) comprising one or more physical components; and
one or more client devices (120A-N) communicatively coupled to the engineering system (102) via a network (104), wherein the engineering system (102) is configured to perform a method according to any of the claims 1 to 11.

**14.** A computer-program product, having machine-readable instructions stored therein, that when executed by a processing unit (202), cause the processing unit (202) to perform a method according to any of the claims 1-11.

**15.** A signal with embedded machine-readable instructions, the signal being received from a computer system, **characterized in that** when executed by a processing unit (202), the machine-readable instructions causes a processing unit (202) to perform a method according to any of the claims 1-11.

EP 4 557 079 A1

# FIG 1

FIG 2

FIG 3

| 302 | 304 | 306 | 308 |
| 310 | 312 | 314 | |

112

FIG 4A

400

```
┌─────────────┐
│     402     │
└─────────────┘
       │
       ▼
┌─────────────┐
│     404     │
└─────────────┘
       │
       ▼
┌─────────────┐
│     406     │
└─────────────┘
       │
       ▼
┌─────────────┐
│     408     │
└─────────────┘
       │
       ▼
┌─────────────┐
│     410     │
└─────────────┘
       │
       ▼
┌─────────────┐
│     412     │
└─────────────┘
       │
       ▼
      ( A )
```

FIG 4B

400

A

414

416

418

420

422

B

# FIG 4C

400

# FIG 5

500

502A → 502

504 ← 504A

506A → 506

508 ← 508A

510A → 510

504A → 512

514

FIG 6

600

```
        ┌──────────┐      ┌──────────┐      ┌──────────┐
        │   602A   │─────▶│   602    │◀─────│   602A   │
        └──────────┘      └──────────┘      └──────────┘
                               │
                               ▼
                          ┌──────────┐      ┌──────────┐
                          │   604    │◀─────│   604A   │
                          └──────────┘      └──────────┘
                               │
                               ▼
        ┌──────────┐      ┌──────────┐
        │   606A   │─────▶│   606    │
        └──────────┘      └──────────┘
                               │
                               ▼
                          ┌──────────┐      ┌──────────┐
                          │   608    │◀─────│   608A   │
                          └──────────┘      └──────────┘
                               │
                               ▼
        ┌──────────┐      ┌──────────┐
        │   610A   │─────▶│   610    │
        └──────────┘      └──────────┘
                               │
                               ▼
                          ◇──────────◇
                          │   612    │
                          ◇──────────◇
                               │
                               ▼
                          ┌──────────┐
                          │   614    │
                          └──────────┘
```

# FIG 7A

702

```
IF #myVar_1=5 THEN

        IF #myVar_2=6 THEN

                IF #myVar_3=7 THEN

                END_IF;

        END_IF;
END_IF;
```

706A
706B
706D
706E
If #myVar_1
5
END IF
706C
END IF
706G
If #myVar_1
706F
6
706I
If #myVar_1
7
END IF
706H

## FIG 7B

# FIG 7C

710

706A → 706E → 706B

706C   706D   706G

706F ← 706I ← 706H

124A

IF #myVar_1＝5 AND #myVar_2＝6 AND #myVar_3＝7

END_IF;

712

# FIG 8A

802

IF #numberOfitems<>5 THEN #Continue: = TRUE;

END_IF;

124A

804

IF #Input_Number_Of_Items<>5 THEN

#Out_Continue: = TRUE;

END_IF;

# FIG 8B

806

Start motor when waterlevel is low and stop when its high

124A

808

IF „Water_Level_Is_Low"= TRUE THEN

„Run_Motor" : = TRUE;

ELSE IF „ Water_Level_High" = TRUE THEN

„Run_Motor" = FALSE;

END_IF;

# FIG 8C

810

810A

810A

810C

124A

812

IF „Water_Level_Is_Low"= TRUE THEN

„Run_Motor" : = TRUE;

ELSE IF „ Water_Level_High" = TRUE THEN

„Run_Motor" = FALSE;

END_IF;

# FIG 9

900

Intput:

902

IF #numberOfitems<>5 THEN #Continue: = TRUE;

END_IF;

Output:

904

IF #Input_Number_Of_Items<>5 THEN

#Out_Continue: = TRUE;

END_IF;

**EUROPEAN SEARCH REPORT**

Application Number

EP 23 20 9650

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/040727 A1 (SIEMENS AG [DE]; SIEMENS CORP [US]) 4 March 2021 (2021-03-04) * paragraph [0060]; claim 1 * * paragraphs [0027], [0028], [0044], [0034] * | 1-15 | INV. G06F8/35 G06N3/0455 |
| A | HONG JOEY ET AL: "Latent Programmer: Discrete Latent Codes for Program Synthesis", INTERNATIONAL CONFERENCE ON MACHINE LEARNING (ICML) (2021), 1 December 2020 (2020-12-01), XP093148300, DOI: https://ui.adsabs.harvard.edu/link_gateway /2020arXiv201200377H/doi:10.48550/arXiv.20 12.00377 Retrieved from the Internet: URL:https://storage.googleapis.com/gweb-re search2023-media/pubtools/pdf/e2e0b316d50c c895cd235360aa7bf84e5eede690.pdf [retrieved on 2024-04-05] * abstract; figure 2 * * Section 2 * | 1-15 | |
| A | US 2016/350441 A1 (KAKRANIA DEEPIKA [US] ET AL) 1 December 2016 (2016-12-01) * abstract * * paragraph [0027] * | 1-15 | TECHNICAL FIELDS SEARCHED (IPC) G06F G06N |

-/--

The present search report has been drawn up for all claims

| Place of search | Date of completion of the search | Examiner |
|---|---|---|
| Munich | 5 April 2024 | Hoareau, Samuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

**EP 23 20 9650**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Kushman Nate ET AL: "Leslie A. Kolodziejski Chairman, Department Committee on Graduate Theses", , 28 August 2015 (2015-08-28), XP093148415, Retrieved from the Internet: URL:https://dspace.mit.edu/bitstream/handle/1721.1/101572/940573214-MIT.pdf?sequence=1&isAllowed=y [retrieved on 2024-04-05] * Chapter 1 * ----- | 1-15 | |

TECHNICAL FIELDS
SEARCHED     (IPC)

The present search report has been drawn up for all claims

| Place of search | Date of completion of the search | Examiner |
|---|---|---|
| Munich | 5 April 2024 | Hoareau, Samuel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 23 20 9650**

This annex lists the patent family members relating to the patent documents cited in the above-mentioned European search report.
The members are as contained in the European Patent Office EDP file on
The European Patent Office is in no way liable for these particulars which are merely given for the purpose of information.

**05-04-2024**

| Patent document cited in search report | Publication date | Patent family member(s) | Publication date |
|---|---|---|---|
| WO 2021040727 A1 | 04-03-2021 | NONE | |
| US 2016350441 A1 | 01-12-2016 | NONE | |

EPO FORM P0459

For more details about this annex : see Official Journal of the European Patent Office, No. 12/82